**Europäisches Patentamt**

**European Patent Office**

**Office européen des brevets**

(11) Veröffentlichungsnummer: **0 454 138 A2**

# (12) EUROPÄISCHE PATENTANMELDUNG

(21) Anmeldenummer: 91106730.4

(22) Anmeldetag: 25.04.91

(51) Int. Cl.5: **C04B 41/50**, C01F 7/34, B01J 20/32

(30) Priorität: 26.04.90 US 513991

(43) Veröffentlichungstag der Anmeldung:
30.10.91 Patentblatt 91/44

(84) Benannte Vertragsstaaten:
**DE FR GB IT**

(71) Anmelder: **VEREINIGTE ALUMINIUM-WERKE AKTIENGESELLSCHAFT**
**Georg-von-Boeselager-Strasse 25**
**W-5300 Bonn 1(DE)**

(72) Erfinder: **Brown, Neil, Dr.**
**Am Heerwege 2**
**W-5010 Bergheim/Erft(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**W-5300 Bonn 1(DE)**

(54) **Verbundpulver und Verfahren zum Beschichten von Keramikpulvern.**

(57) Die Erfindung betrifft Verfahren zur Herstellung von Keramik-Verbundpulvern und neuen Verbundpulvermaterialien, insbesondere Verfahren zur Herstellung von Keramik-Verbundpulvern, bei denen feinverteilte Dispersionen von Metalloxiden und/oder nichtoxidischen keramischen Pulvern mit Aluminiumoxid in Form von Böhmit beschichtet werden. Solche Pulver eignen sich besonders zur Herstellung von Struktur- und Elektrokeramik mit minimalen Defekten.

Die Verfahren beinhalten die Schritte der Zugabe eines organischen Komplexbildners zu einer wäßrigen sauren aluminiumhaltigen Lösung, der Anhebung des pH-Wertes der Lösung, der Zugabe einer festgelegten Menge Pulverpartikel in die Lösung zur Bildung einer Suspension, der Anhebung der Temperatur der Suspenion sowie der anschließenden Abtrennung der mit Böhmit beschichteten Partikel.

EP 0 454 138 A2

EP 0 454 138 A2

Die vorliegende Erfindung betrifft Verfahren zur Herstellung von Keramik-Verbundpulvern und neuen Verbundpulvermaterialien, insbesondere Verfahren zur Herstellung von Keramik-Verbundpulvern, bei denen feinverteilte Dispersionen von Metalloxiden und/oder nichtoxidischen keramischen Pulvern mit Aluminiumoxid in Form von Böhmit beschichtet werden.

Das Ausgangspulver ist einer der kritischsten Faktoren bei der Herstellung von Hochleistungskeramiken. Die gewünschten Pulver müssen rein und homogen sein sowie eine kleine Partikelgröße aufweisen. Darüberhinaus muß ihre Herstellung kostengünstig sein. Mit solchen Pulvern kann Struktur- und Elektrokeramik mit minimalen Defekten hergestellt werden.

Es hat sich gezeigt, daß die hydrothermale Synthese von Hochleistungskeramikpulvern eine attraktive Methode zur Herstellung von zweiphasigen Systemen ist, bei denen Keramikoxide, wie z. B. Zirkonoxid ($ZrO_2$) und Titanoxid ($TiO_2$) mit Aluminiumoxid ($Al_2O_3$) beschichtet werden.

Das Interesse an zweiphasigen Keramikpulvern ist mit der Entdeckung der Dispersionsverstärkung stark gestiegen. Bei den meisten Keramiken, die durch Dispersion verstärkt wurden, handelt es sich um zweiphasige Materialien mit tetragonalem Zirkonoxid als aktiver Komponente. Das am häufigsten verwendete System ist $ZrO_{2TET}$-$Al_2O_3$, vgl. z. B. "Zirconia and Zirconia Ceramics", R. Stevens, Magnesium Elektron, Veröffentlichungs-Nr. 113, Juli 1986. In dem Artikel wird aufgezeigt, daß Zirkonoxid in einer der drei eindeutig definierten Phasen existieren kann, d. h. in der monoklinen, tetragonalen oder kubischen Phase. Die monokline Phase ist bis $\approx$ 1170 °C stabil, wo sie in die tetragonale Phase übergeht. Die tetragonale Phase ist bis $\approx$ 2370 °C stabil, wo sie in die kubische Phase übergeht. Die kubische Phase existiert bis zum Schmelzpunkt bei 2680 °C.

Mit der Umwandlung der monoklinen in die tetragonalen Phase geht eine Volumenänderung von ca. 5 %-igen einher. Die Erhitzung des monoklinen $ZrO_2$ bis zur Phasenumwandlung führt zu einer 5 % Volumenabnahme, wobei das Kühlen des tetragonalen $ZrO_2$ unter die Umwandlungstemperatur zu einer Volumenvergrößerung von 5 % führt. Dabei kommt es zu einem Bruch des $ZrO_2$-Materials, d. h. das $ZrO_2$-Material weist nach dem Kühlvorgang Risse und Spalten auf. Bei der Verbesserung der Härte und Festigkeit von $ZrO_2$-$Al_2O_3$-Keramiken wird jedoch die Volumenausdehnung bei der Umwandlung der tetragonalen in die monokline Phase genutzt.

Ein anderes zweiphasiges System von wachsendem Interesse ist $TiO_2$-$Al_2O_3$, aus dem beim Sintern Aluminiumtitanat entsteht. Aufgrund seiner thermischen Ausdehnungseigenschaften und seiner hohen Wärmebeständigkeit ist dieses System wichtig, vgl. "Preparation and Sintering of Monosized $Al_2O_3$-$TiO_2$ Composite Powder", H. Okamura, E. A. Barringer und H. K. Bowen, J. Am. Ceram. Soc., 69 [2] C-22-C-24 (1986).

Bei der Herstellung von zweiphasigen Pulvern für Hochleistungskeramikanwendungen weist das übliche Keramikherstellungsverfahren, d. h. Co-Mahlen mit anschließendem mechanischen und isostatischen Pressen, eine Reihe von Nachteilen auf. Dem zweiphasigen Pulverprodukt kann es an Gleichförmigkeit und Homogenität auf mikroskopischer Ebene fehlen. Darüberhinaus kann das Mahlen über eine längere Zeitspanne zu Gitterdefekten und Verformungen in den Materialien führen.

Folglich enthalten die Vorläufer bei der Herstellung von zweiphasigen Pulvern für Hochleistungskeramiken in der Regel feinverteilte Dispersionen von Metalloxiden und/oder Metallhydroxiden. Chemische Verfahren zur Herstellung dieser feinen Pulver bei niedrigen Temperaturen sind erhältlich. Diese Verfahren sind auch für nichtoxidische Keramiken verwendbar. Beispielsweise ist eine Sol-Gel-Technik zur Herstellung von feinverteilten zweiphasigen Pulvern in "Preparation and Sintering of Monosized $Al_2O_3$-$TiO_2$ Composite Powder" offenbart, H. Okamura, E. A. Barringer und H. K. Bowen. J. Am. Ceram. Soc., 69 [2] C-22-C-24 (1986).

Eine andere Technik, die die gemeinsame Fällung zur Herstellung von feinverteilten Materialien verwendet, ist in "Colloid Science of Composite Systems" dargelegt, E. Matijevic, Science of Ceramic Chemical Processing, Wiley, New York, 1986, S. 463 - 481.

Die Sol-Gel- und Mitfällungs-Techniken werden in der Pulverherstellung oft zur Verbesserung der Homogenität der Pulverzusammensetzung und der mikrostrukturellen Homogenität des gesinterten Körpers verwendet.

Das Sol-Gel-Verfahren führt in der Regel zur gleichzeitigen Hydrolyse der entsprechenden Metallalkoxide. Die Partikelgröße im Sol ist extrem klein, wobei die durchschnittliche Partikelgröße < 0,1 μm beträgt und der Feststoffgehalt gering ist. Das Gelprodukt muß getrocknet und relativ große Wassermengen müssen während der Kalzination zu den entsprechenden Oxiden entfernt werden. Das Verfahren ist sehr kostspielig.

Bei den bestehenden Mitfällungsverfahren wird eine wäßrige Lösung eines Aluminiumsalzes entweder mit Hilfe einer sauren oder einer basischen Lösung, die die zweite Metalloxidkomponente enhält, neutralisiert. In der Regel ist das zweiphasige Fällprodukt röntgenamorph mit hohem Wassergehalt (üblicherweise

2

> 35 Gew-%). Es kann schwierig sein, das Fällprodukt zu filtern und frei von Anionen zu waschen, die mit den Reaktionslösungen eingeführt werden (z. B. Sulfate, Chloride, Nitrate). Sorgfältiges Waschen ist nicht wünschenswert, da dies zu einem Verlust oder einer Veränderung des feinen Fällproduktes führen kann.

Bei der Verwendung der Sol-Gel- und Mitfällungs-Verfahren ist es wichtig, daß jede Phase gleichzeitig hergestellt wird und in einer innig gemischten homogenen Dispersion verbleibt. Probleme entstehen, wenn die einzelnen Bestandteile nicht beim selben pH-Wert ausfallen, so daß eine sofortige Trennung der Komponenten entsteht.

Bei der Herstellung von zweiphasigen Pulvern besteht eine Alternative in der Verwendung eines Beschichtungsverfahrens, d. h. eine Komponente wird im festen Zustand als Impferkristalle in einer gerührten Lösung, die die zweite Komponente enthält, verwendet, wobei die zweite Komponente dazu angeregt wird, auf den Impferkristalloberflächen zu kristallisieren und/oder auszufallen. Dieses Verfahren weist eine Reihe von Vorteilen zur Herstellung von Keramik-Verbundpulvern auf. Die chemische Zusammensetzung jeder Phase kann z. B. durch Auswahl des Ausgangspulvers, des Beschichtungsmaterials und des quantitativen Verhältnisses der beiden reguliert werden. Die Partikelgröße des beschichteten Endpulvers könnte auch durch die Auswahl der Partikelgröße des Ausgangspulvers und durch Veränderung der Dicke der Beschichtung reguliert werden. Die gleichförmige Ablagerung einer Phase auf der anderen würde mehr oder weniger eine homogene Verteilung der zwei Phasen sichern.

Beim Beschichten der Metalloxide mit Aluminiumoxid ist es notwendig, Aluminiumhydroxid zu kristallisieren und diese dann zu Aluminiumoxid durch Kalzination bei hohen Temperaturen umzuwandeln. Dies stellt hohe Anforderungen an die Art und die Form der Aluminiumhydroxidbeschichtung. Die abgelagerte Aluminiumoxidschicht muß beispielsweise in der Hydroxidform stark haften (sie würde unter der Bedingung, daß gut gerührt wird, in einer homogen gemischten Suspension kristallisiert) und eine Struktur aufweisen, die das Herauslösen von Wasser ohne Bildung von Makrorissen und/oder Trennung der abgelagerten Schicht von der darunterliegenden Metalloxidoberfläche während der Kalzinierung zu Aluminiumoxid ermöglicht.

Eine besondere Schwierigkeit bei den Verfahren des Stands der Technik zur Herstellung zweiphasiger Pulvermaterialien besteht in der Form des Aluminiumhydroxids, das in der Gegenwart von Metalloxiden kristallisiert und/oder gefällt wird. Zwei Beispiele von Fällungs- und/oder Kristallisationsverfahren des Aluminiumhydroxids in der Gegenwart von Metalloxiden sind für die vorliegende Erfindung relevant. Bei der einen Technik wird Hydrargillit ($Al_2O_3 \cdot 3H_2O$) aus einer übersättigten Natriumaluminatlösung bei 40 $^\circ$C ausgefällt. Dieses Verfahren wird in der US-Patentschrift 4,574,001, 4. März 1984 erteilt, "Process for Producing Finely Divided Dispersion of Metal Oxides in Aluminum Hydroxide", K. Bielfeldt und D. J. Braun, offenbart.

Ein anderes relevantes Verfahren bezieht sich auf die Fällung von Pseudoböhmit durch erzwungenen Hydrolyse von Aluminiumlösungen. Das Verfahren ist in "Preparation and Properties of Coated Uniform Inorganic Colloidal Particles: 1. Aluminum (Hydrous) Oxide on Hematite, Chromia and Titania", S. Kratokvil und E. Matijevic; Advanced Ceramic Materials 2 (4) (1987), 798-803, dargelegt.

Im Idealfall sollte das Aluminiumhydroxid, das kristallisiert, in Form von kristallinem Böhmit vorliegen, da letzterer den geringsten Gehalt an Konstitutionswasser, wie in Tabelle I gezeigt, aufweist.


Tabelle I


| Form des Aluminiumhydroxids | Wassergehalt |
|---|---|
| Böhmit ($Al_2O_3 \cdot H_2O$) | 15 % |
| Pseudoböhmit ($Al_2O_3 \cdot nH_2O$) wobei n >1 < 3 | 20-30 % Wasser (üblicherweise) |
| Hydrargillit ($Al_2O_3 \cdot 3H_2O$) | 35 % Wasser |
| (röntgen) amorph | > 35 % Wasser (üblicherweise) |

Darüberhinaus gibt der Stand der Technik keinen Hinweis darauf, daß eine Aluminiumhydroxid-Beschichtung auf der Oberfläche eines Metalloxids auch auf einer Oxidoberfläche bestehen bleibt, nachdem das Hydroxid zu Aluminiumoxid kalziniert wurde.

Es wird ein Verfahren zur Kristallisation von Aluminiumhydroxid in Form von kristallinem Böhmit auf Metalloxiden benötigt, wobei die kristalline Ablagerung eine gleichförmige Aluminiumhydroxid-Beschichtung liefert, die fest auf der darunterliegenden Metalloxidoberfläche haftet und während der Kalzinierung des Aluminiumhydroxids zu Aluminiumoxid weiter fest haftet. Ferner sollte die Geschwindigkeit der Böhmitkristallisierung hoch sein und die Ausbeute wirtschaftlich akzeptabel. Aluminiumverbunde mit nichtoxidischen Keramikpulvern sind wichtige Materialien, die erhöhte physikalische/mechanische Eigenschaften aufweisen können. Verbunde mit Titancarbid (TiC) und Titanborid (TiB$_2$) führen beispielsweise zu hochverschleißfesten Materialien, die als Schneidwerkzeuge verwendet werden. Vgl. beispielsweise "Rapid Rate of Sintering of Al$_2$O$_3$-TiC Composites for Cutting-Tool Applications", M. Lee und M. P. Borom; Adv. Ceram. Materials, 3 (1988) 38-44; und "Sintering and Characterization of Al$_2$O$_3$-TiB$_2$ Composites", I. Kimura, N. Hotta, Y. Hiraoka und N. Saito. J. of the Euro. Ceram.. Soc. 5 (1989) 23-27.

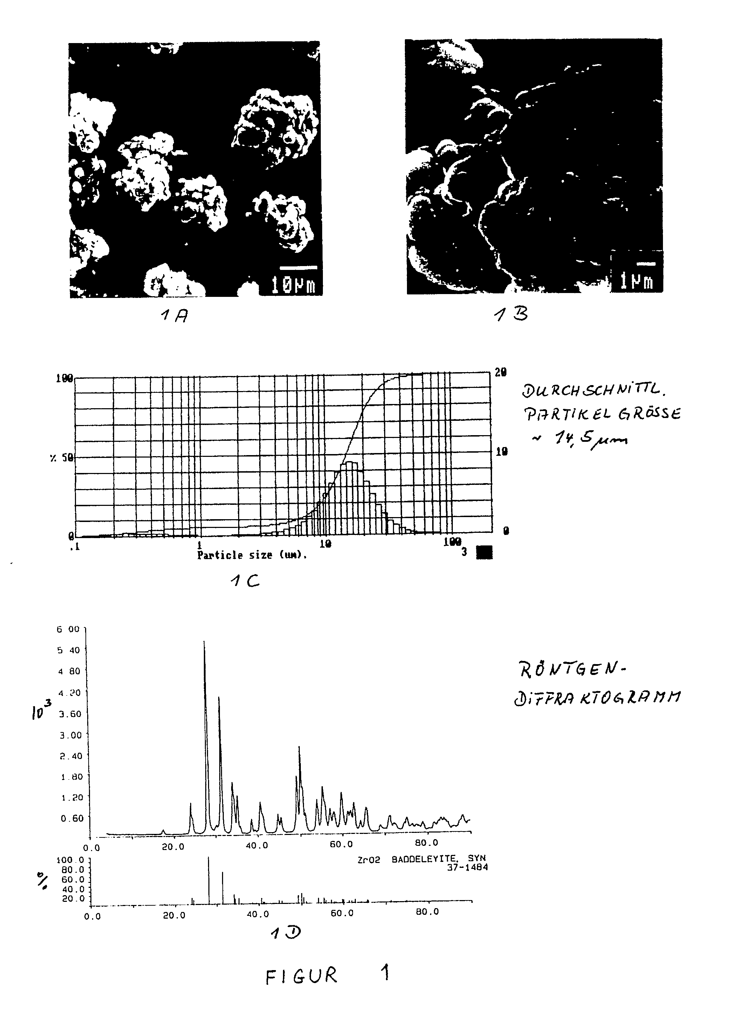

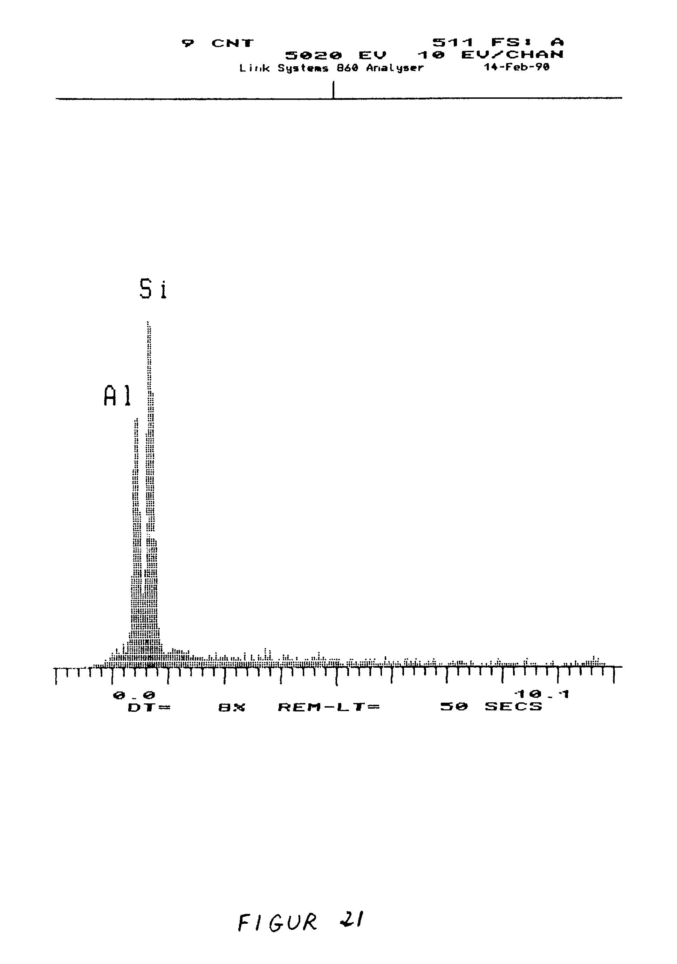

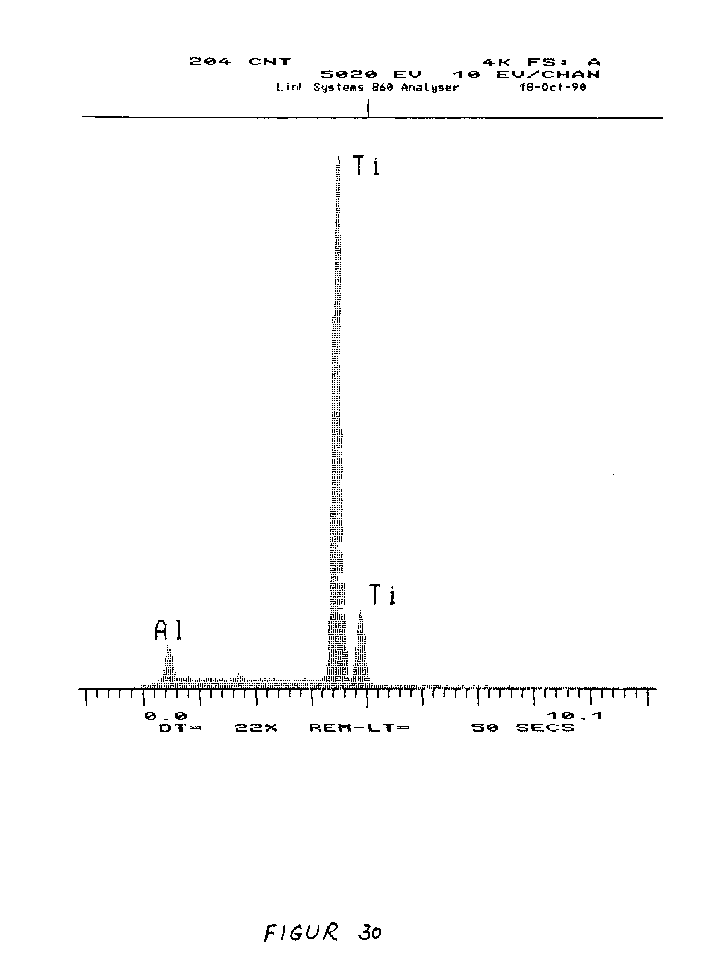

Kurze Beschreibung der Abbildungen (Fig. 1a - 30):

| | |
|---|---|
| Fig. 1a: | Rasterelektronenmikroskopaufnahme (REM)) des monoklinen ZrO$_2$; Vergrößerung = 1000x; |
| Fig. 1b: | REM-Aufnahme des monoklinen ZrO$_2$; Vergrößerung = 5000x; |
| Fig. 1c: | Korngrößenverteilung des monoklinen ZrO$_2$ der Fig. 1a; |
| Fig. 1d: | Röntgen-Diffraktogramm des monoklinen ZrO$_2$ der Fig. 1a; |
| Fig. 2a: | REM-Aufnahme des hydrothermal kristallisierten Böhmits; Vergrößerung = 1000x; |
| Fig. 2b: | REM-Aufnahme des hydrothermal kristallisierten Böhmits der Fig. 2a; Vergrößerung = 5000x; |
| Fig. 2c: | Korngrößenverteilung des hydrothermal kristallisierten Böhmits der Fig. 2a; |
| Fig. 2d: | Röntgen-Diffraktogramm des hydrothermal kristallisierten Böhmits der Fig. 2a; |
| Fig. 3a: | REM-Aufnahme des mit Böhmit beschichteten monoklinen ZrO$_2$; Vergrößerung = 1000x; |
| Fig. 3b: | REM-Aufnahme des mit Böhmit beschichteten monoklinen ZrO$_2$ der Fig. 3a; Vergrößerung = 10.000x; |
| Fig. 3c: | Korngrößenverteilung des mit Böhmit beschichteten monoklinen ZrO$_2$ der Fig. 3a; |
| Fig. 3d: | Röntgen-Diffraktogramm des mit Böhmit beschichteten monoklinen ZrO$_2$ der Fig. 3a; |
| Fig. 4 : | EDAX-Analyse des mit Böhmit beschichteten monoklinen ZrO$_2$; |
| Fig. 5a: | REM-Aufnahme des mit Böhmit beschichteten monoklinen ZrO$_2$ der Fig. 5a nach der Kalzinierung; Vergrößerung = 1000x; |
| Fig. 5b: | REM-Aufnahme des mit Böhmit beschichteten monoklinen ZrO$_2$ nach der Kalzinierung; Vergrößerung = 10.000x; |
| Fig. 5c: | Korngrößenverteilung des mit Böhmit beschichteten monoklinen ZrO$_2$ der Fig. 5a nach der Kalzinierung; |
| Fig. 5d: | Röntgen-Diffraktogramm des mit Böhmit beschichteten monoklinen ZrO$_2$ der Fig. 5a nach der Kalzinierung; |
| Fig. 6a: | REM-Aufnahme des Titanoxids (Anatas); Vergrößerung = 10.000; |
| Fig. 6b: | REM-Aufnahme des Titanoxids (Anatas) der Fig. 6a; Vergrößerung = 20.000x; |
| Fig. 6c: | Korngrößenverteilung des Titanoxids (Anatas) der Fig. 6a; |
| Fig. 6d: | Röntgen-Diffraktogramm des Titanoxids (Anatas); |
| Fig. 7a: | REM-Aufnahme des Titanoxids (Anatas), das mit Böhmit beschichtet wurde; Vergrößerung = 5000x; |
| Fig. 7b: | REM-Aufnahme des Titanoxids (Anatas) der Fig. 7a, das mit Böhmit beschichtet wurde; Vergrößerung = 10.000x; |
| Fig. 7c: | Korngrößenverteilung des mit Böhmit beschichteten Titanoxids der Fig. 7a (Anatas); |
| Fig. 7d: | Röntgen-Diffraktogramm des mit Böhmit beschichteten Titanoxids der Fig. 7a; |
| Fig. 8 : | EDAX-Analyse des mit Böhmit beschichteten Titanoxids der Fig. 7a; |
| Fig. 9a: | REM-Aufnahme des mit Böhmit beschichteten Titanoxids (Anatas) nach der Kalzinierung; Vergrößerung = 5000x; |
| Fig. 9b: | REM-Aufnahme des mit Böhmit beschichteten Titanoxids (Anatas) der Fig. 9a nach der Kalzinierung; Vergrößerung = 10.000x |
| Fig. 9c: | Korngrößenverteilung des mit Böhmit beschichteten Titanoxids (Anatas) der Fig. 9a |

4

nach der Kalzinierung;

Fig. 9d: Röntgen-Diffraktogramm des mit Böhmit beschichteten Titanoxids (Anatas) der Fig. 9a nach der Kalzinierung;

Fig. 10: EDAX-Analyse des mit Böhmit beschichteten Titanoxids (Anatas) nach der Kalzinierung;

Fig. 11: Querschnitt-REM-Aufnahme (5000x) eines Böhmitpartikels der Erfindung;

Fig. 12: Querschnitt-REM-Aufnahme (5000x) eines Böhmitpartikels der Erfindung;

Fig. 13a und 13b: REM-Aufnahmen des SiC (Vergrößerung 1000x bzw. 5000x);

Fig. 14: Korngrößenverteilung der SiC-Partikel der Fig. 13;

Fig. 15: EDAX-Analyse der SiC-Partikel der Fig. 13;

Fig. 16: REM-Aufnahme der SiC-Partikel der Fig. 13, nachdem sie mit Böhmit beschichtet wurden;

Fig. 17: Korngrößenverteilung der Partikel der Fig. 16.

Fig. 18: EDAX-Analyse der Partikel der Fig. 16;

Fig. 19: REM-Aufnahme der Partikel der Fig. 16, nachdem der Böhmit zu Aluminiumoxid kalziniert wurde;

Fig. 20: Korngrößenverteilung der Partikel der Fig. 19.

Fig. 21: EDAX-Analyse der Partikel der Fig. 19;

Fig. 22: REM-Aufnahme der Titandiborid-Partikel;

Fig. 23: Korngrößenverteilung der Partikel der Fig. 22;

Fig. 24: EDAX-Analyse der Partikel der Fig. 22;

Fig. 25: REM-Aufnahme der mit Böhmit beschichteten $TiB_2$-Partikel;

Fig. 26: Korngrößenverteilung der Partikel der Fig. 25;

Fig. 27: EDAX-Analyse der Partikel der Fig. 25;

Fig. 28, 29, 30 : REM-Aufnahme, Korngrößenverteilung und EDAX-Analyse der Partikel der Fig. 25 nach in situ-Kalzinierung der Böhmitbeschichtung zu Aluminiumoxid.

Zusammenfassung der Erfindung

Die vorliegende Erfindung liefert Verfahren zur Kristallisation von Böhmit auf den Oberflächen feinverteilter Metalloxid- (und/oder nichtoxidischer keramischer) Partikel. Die Beschichtung haftet fest auf den Metalloxid- (und/oder nichtoxidischen Keramik-) Partikeloberflächen während der nachfolgenden in situ Umwandlung des Böhmits zu Aluminiumoxid durch Kalzination.

Es wurde nun herausgefunden, daß ein unter hydrothermalen Bedingungen aus einer alkalischen Lauge kristallisierter Böhmit auf Metalloxidpartikeln haftet. Es wurde auch herausgefunden, daß das zuvor erwähnte hydrothermale Kristallisationsverfahren gleichermaßen für das Beschichten von nichtoxidischen Keramikpulvern mit Aluminiumoxid (Böhmit) verwendet werden kann, da der Böhmit auch fest auf nichtoxidischen Keramikpartikeln haftet. Das Böhmitkristallisationsverfahren umfaßt die folgenden Schritte:

Herstellung einer sauren aluminiumhaltigen Lösung (z. B. Aluminiumsulfat) bei Raumtemperatur;

Komplexieren der Aluminiumionen in Lösung mit einer organischen Säure (z. B. Weinsäure);

Anheben des pH-Wertes der Lösung mit den komplexierten Aluminiumionen auf einen Wert > 9 durch Zugabe konzentrierter Lauge (z. B. Natriumhydroxid) zu der komplexhaltigen Lösung;

Zugabe von Metalloxid- (und/oder nichtoxidischen keramischen) Partikeln von festgelegter Größe und Menge zu der alkalischen Aluminiumlösung zur Bildung einer Feststoff/Flüssigkeit-Suspension;

Anheben der Temperatur der Feststoff/Flüssigkeit-Suspension auf über 150 ˚C in einem Autoklaven;

Halten der Feststoff/Flüssigkeit-Suspension unter hydrothermalen Bedingungen, bis die Aluminiumionen in der Lösung als Böhmit auf den Oberflächen der Partikel kristallisieren;

Kühlen der Feststoff/Flüssigkeit-Suspension mit den mit Böhmit beschichteten Partikeln auf Bedingungen atmosphärischen Drucks, d. h. auf eine Temperatur < 100 ˚C und einen Druck < 760 Torr (1 x $10^5$ Pa);

Rückgewinnung der mit Böhmit beschichteten Partikel (z. B. durch Filtration) aus der Suspension;

Waschen der mit Böhmit beschichteten Partikel mit heißem Wasser und

Trocknen der mit Böhmit beschichteten Partikel.

Die Böhmitbeschichtung kann dann (in situ) zu Aluminiumoxid durch Kalzination bei erhöhter Temperatur umgewandelt werden (z. B. bei einer Temperatur > 400 ˚C). Während dieses Schrittes haftet die Beschichtung weiter fest auf den Kernpartikeloberflächen, aber auch auf den nichtoxidischen Partikeloberflächen.

Das Verfahren der vorliegenden Erfindung umfaßt die hydrothermale Kristallisation von Böhmit unter alkalischen Bedingungen, erhöhten Temperaturen und Drücken in Gegenwart eines sauerstoffhaltigen Gases auf feinverteilten Metalloxidpulvern und/oder feinverteilten nichtoxidischen Keramikpartikeln.

Der Begriff "hydrothermale Bedingungen" bezieht sich hier auf das "Aussetzen" oder das "Eintauchen" in eine wäßrige Flüssigkeit bei erhöhter Temperatur (z. B. > 150 °C).

Ein bevorzugtes nichteinschränkendes Beispiel für Metalloxidpulver ist das monokline Zirkonoxid, das von Riedl de Haen AG, Seelze-Hannover, BRD, erhältlich ist. Ein bevorzugtes nichteinschränkendes Beispiel für nichtoxidische Partikel sind Siliziumcarbid (SiC) und Titandiborid (TiB$_2$).

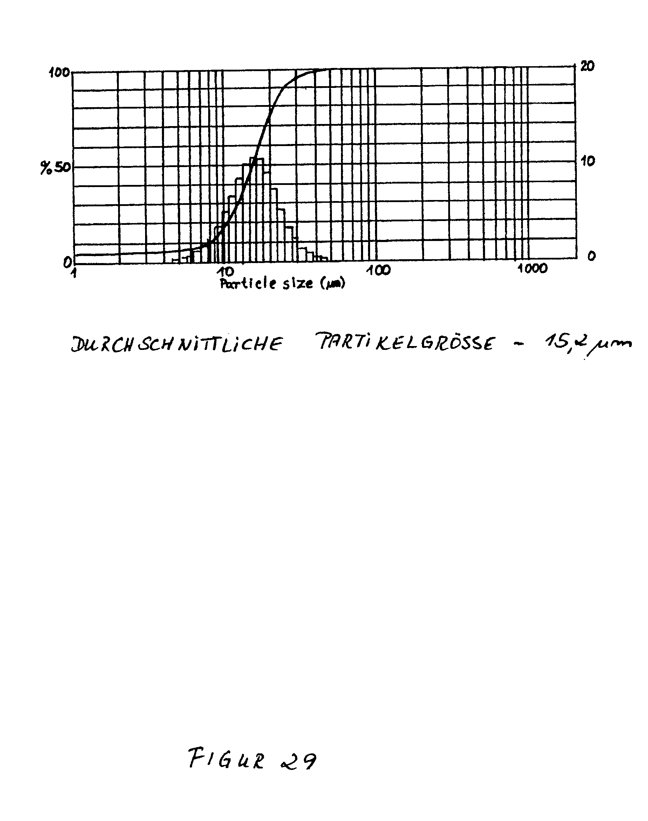

Die durchschnittliche Partikelgröße der Zirkonoxidpartikel beträgt etwa 15 $\mu$m. Die Partikelgröße liegt jedoch in einem Bereich von 5 bis 50 $\mu$m. Die Zirkonoxidpartikel der Fig. 1a und 1b bestehen aus agglomerierten Zirkonoxidkugeln, wobei jede Kugel eine durchschnittliche Partikelgröße von 1-3 $\mu$m aufweist. Das Röntgen-Diffraktogramm (Fig. 1d) bestätigt, daß die Kristallphase des Zirkonoxids monoklin ist. Andere geeignete Metalloxidpartikel zur Verwendung für die vorliegende Erfindung sind Titanoxid, Magnesiumoxid sowie die Oxide der Metalle Nickel, Kobalt, Zink, Chrom, Eisen oder der seltenen Erden. Die durchschnittliche Partikelgröße und Verteilung für nichtoxidische keramischen Pulver ist in den Fig. 17 und 29 dargestellt.

Überraschenderweise wurde herausgefunden, daß kleine Böhmitpartikel einer Größe und Form, die denen der monoklinen Zirkonoxidpartikel ähnelt, hydrothermal unter alkalischen Bedingungen kristallisieren, wenn man von einer Aluminiumsulfatlösung ausgeht, in der hydratisierte Al$^{3+}$-Ionen zunächst komplexiert und in der Lösung durch Zugabe eines Komplexbildners, wie z. B. organische Säure, stabilisiert werden. Geeignete Säuren sind Glucon-, Wein-, Zitronen- und Oxalsäure. Die organische Säure, die als Komplexbildner agiert, wird zu der Lösung zugegeben, bevor der pH-Wert der Lösung in den alkalischen Bereich durch Zugabe von geeigneten Basen, wie z. B. Natriumhydroxid, angehoben wird.

In einer wäßrigen Lösung bei erhöhter Temperatur (z. B. > 150 °C) werden die organischen kohlenstoffhaltigen Substanzen, die mit hydratisierten Al$^{3+}$-Ionen komplexiert wurden, oxidativ abgebaut und bilden Substanzen mit niedrigerem Molekulargewicht, insbesondere unter dem Einfluß von zugegebenem Sauerstoff. Wenn die Al-organischen Komplexe zerfallen, kristallisieren die freigesetzten Aluminiumionen aus der Lösung in Form von Böhmit bei der gleichen (erhöhten) Temperatur. Die mit der vorliegenden Erfindung gebildeten Böhmitpartikel haben einen Durchmesser von etwa 5 bis 50 $\mu$m (durchschnittliche Partikelgröße). In einer bevorzugten Ausführung weisen die Böhmitpartikel einen Durchmesser von ca. 25 $\mu$m auf (durchschnittliche Partikelgröße). Diese Partikelgrößen können durch Veränderung der zugegebenen Sauerstoffmenge im Böhmitkristallisationsschritt zwischen etwa 40 und 5 bar hergestellt werden.

Die Parameter, die die Böhmit-Partikelgröße beeinflussen können, lauten wie folgt:

1. pH- Wert der Lösung
2. Aluminiumkonzentration
3. Art des verwendeten Komplexbildners
4. Menge des verwendeten Sauerstoffgases

Während alle vier Parameter die Böhmitpartikelgröße beeinflussen können, ist nur Parameter (4) von Bedeutung, wenn O$_2$ verwendet wird. Bei festgelegten Werten von pH- Wert, Betriebstemperatur und Komplexbildner führt die Anhebung der verwendeten Sauerstoffmenge zu einer Verringerung der durchschnittlichen Größe der Böhmitpartikel aufgrund der schnelleren Freisetzung der Aluminiumionen für die Kristallisation. Umgekehrt führt eine Verringerung der Sauerstoffmenge zu einer Vergrößerung der durchschnittlichen Größe der Böhmitpartikel. Die Größe der Böhmitpartikel kann auch dadurch verändert werden, daß die Geschwindigkeit, bei der die komplexierten Aluminiumionen in die Lösung für die Kristallisation von Böhmit unter hydrothermalen Bedingungen freigesetzt werden, herauf- oder herabgesetzt wird.

Vorheriges Impfen der aluminiumhaltigen Lösung mit feinverteilten Metalloxiden oder nichtoxidischen Keramikpulvern, wie z. B. Zirkonoxid oder Titanoxid, führt zu einer direkten Kristallisation des Böhmits auf der Oberfläche der Partikel; d. h. eine Beschichtung des kristallinen Böhmits setzt sich direkt auf der Oberfläche der Partikel ab.

Bei Verwendung der vorliegenden Erfindung ist es möglich, Feststoffe bis zu mehreren Zentimetern Durchmesser mit Böhmit zu beschichten. Die Kernpartikel der vorliegenden Erfindung weisen jedoch in der Regel eine Partikelgröße < 1000 $\mu$m auf, vorzugsweise zwischen 5 und 25 $\mu$m, egal ob es sich bei diesen Partikeln um Metalloxid-Partikel oder nichtoxidische Keramikpartikel handelt. Das mit Böhmit beschichtete Verbundpulver der vorliegenden Erfindung weist in der Regel eine Partikelgröße < 1000 $\mu$m auf, vorzugsweise zwischen etwa 0,5 und 50 $\mu$m (durchschnittliche Partikelgröße). Ein besonders bevorzugtes Partikel ist das mit Böhmit beschichtete monokline Zirkonoxid. Das bevorzugt beschichtete Partikel weist eine durchschnittliche Partikelgröße von ca. 17,5 $\mu$m auf. Ein besonders bevorzugtes beschichtetes Partikel mit einem nichtoxidischen Keramikkern ist ein Siliziumcarbidkern, der mit Böhmit beschichtet wurde. Die bevorzugte durchschnittliche Partikelgröße für diese Partikel mit nichtoxidischem Kern ist 10 $\mu$m.

Das hydrothermale Verfahren der vorliegenden Erfindung könnte vorteilhaft und wirtschaftlich in einem Rohrreaktor (z. B. einem Rohrreaktor, wie er in der Patentschrift 4,361,541 des Anmelders offenbart ist) durchgeführt werden. Die wirtschaftlichen Vorteile des Rohrreaktors (der bei hohen Temperaturen mit relativ kurzen Verweilzeiten unter Bedingungen hoher Turbulenz arbeitet) sind in der Aluminiumoxidindustrie bekannt. Vgl., z. B. "Practical Experiences with the Tube Digester", K. Bielfeldt, Journal of Metals, Sep. 1968, S. 48 - 54.

Die vorliegende Erfindung soll nun anhand der folgenden Beispiele detailliert dargelegt werden, die jedoch den Umfang der Erfindung nicht einschränken sollen.

Beispiel I

Hydrothermale Kristallisation von Böhmit

Eine Stammlösung (2 l) von 0,45 M Aluminiumsulfat wurde bei Raumtemperatur durch Lösen von 600 g $Al_2(SO_4)_3 \cdot 18H_2O$ in deionisiertem Wasser hergestellt.

Zu 500 ml der Stammlösung wurden in einem 2l-Glasbecher 500 ml einer 1,5 M Weinsäure (Formel: $C_4H_6O_6$) bei Verwendung eines Magnetrührers unter Rührung zugegeben. In den durch den Magnetrührer entstandenen Wirbeltrichter wurden dann 10 M NaOH eingeleitet, bis der pH-Wert der Lösung 11,2 erreichte. 1 l dieser Lösung wurden in einen 3l-Inconel Autoklaven mit interner Schlange für die schnelle Erhitzung und Kühlung gegeben.

Das Rühren der Autoklavinhalte wurde durch einen permanenten Magnetrührer mit einer Turbine, ausgestattet mit 6 Blättern, und einer Geschwindigkeit von 330 Umdrehungen pro Min. erzeugt. Der Autoklav wurde dann geschlossen und Sauerstoffgas bei 25 °C bis zu einem Partialdruck von $10 \times 10^5$ Pa eingeführt. Das System wurde dann auf eine Temperatur von 250 °C erhitzt (der innere Druck des Autoklavs betrug $58 \times 10^5$ Pa) und bei dieser Temperatur 60 Min. gehalten. Bei 250 °C zersetzte sich der organische kohlenstoffhaltige Komplexbildner zu Verbindungen mit niedrigerem Molekulargewicht (z. B. Natriumacetat, -format, -carbonat), wobei die Aluminiumionen für die Kristallisation als Böhmit freigesetzt wurden.

Beim Kühlen auf Bedingungen atmosphärischen Drucks und eine Temperatur ≈ 100 °C (Druck < 760 Torr) wurde die Suspension aus dem Autoklaven entfernt und die Feststoffe filtriert, mit heißem deionisiertem Wasser gewaschen (Temperatur ≈ 80 °C) und bei 110 °C getrocknet. Das getrocknete Produkt war Böhmit, wog 20,2 g und wies einen Glühverlust (1100 °C/1 h) von 18,8 % auf, d. h. etwas höher als der "ideale" Wert, aber nicht atypisch für die hydrothermale Kristallisation von Böhmit (Vgl., z. B. "Process for Producing Dispersible Boehmite Alumina", E. P. Hertzenberg, I. J. Itzkovitch und I. H. Joyce, U.S. Patentschrift 4,117,105, Sept. 26, 1978).

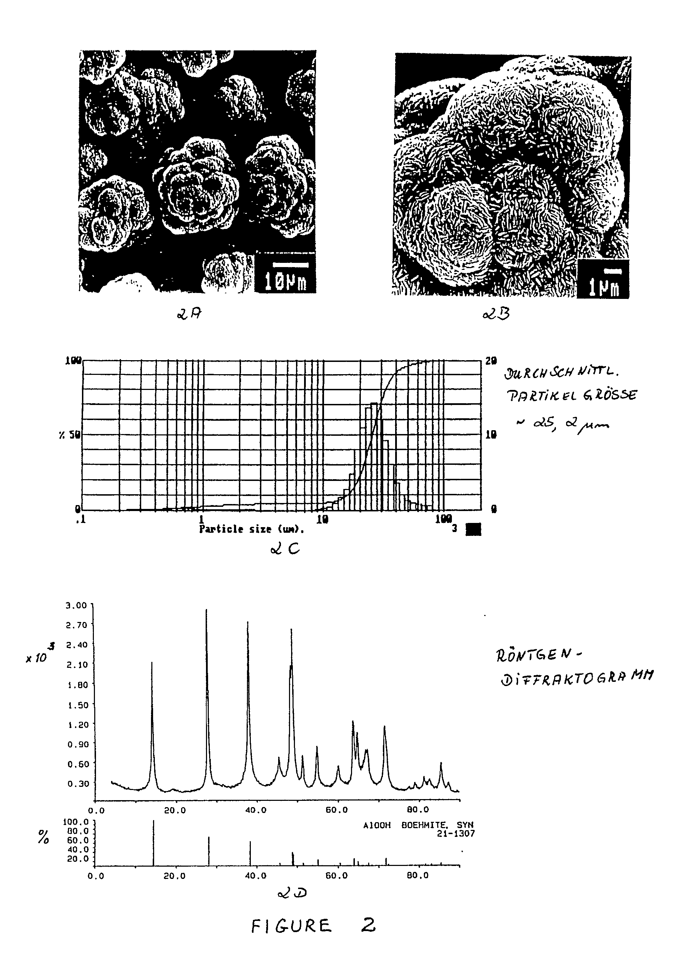

Das Laugenfiltrat (pH-Wert ≈ 7,9) enthielt in erster Linie Natriumsulfat (46,2 g/l $SO_4^{2-}$) und Natriumsalze der organischen Kohlenstoff-Abbauprodukte (Gesamtkohlenstoffkonzentration ≈ 25,7 g/l). Der Aluminiumgehalt des Laugenfiltrats betrug < 0,1 g/l. Der $Na_2O$-Gehalt des Böhmitproduktes betrug 0,32 % und der $SO_4^{2-}$-Gehalt 0,020 %. Rasterelektronenmikroskopaufnahmen (1000x und 5000x Vergrößerung) der Böhmitpartikel, Korngrößenverteilung und dem Röntgendiffraktogramm sind in den Fig. 2a - d gezeigt. Die entsprechenden Unterfiguren d zeigen jeweils die Röntgen-Diffraktogramm-Analysen.

Für die Röntgen-Diffraktogramm-Analysen wurde ein Phillips PW 1820 Vertikaldiffraktometer mit einem PW 1825 Generator und APD 1700 Software verwendet. Das Instrument arbeitet mit etwa 2 g der Pulverprobe und erkennt die verschiedenen Phasen, indem ihre Diffraktogramme mit einer "Bibliothek" von bekannten Diffraktogrammen für Standardsubstanzen verglichen werden. Der Ausdruck zeigt die Impulse pro Sekunde gegenüber dem Beugungswinkel unter Verwendung von $CuK_\alpha$-strahlung. Die Gesamtpartikelstruktur der reinen Böhmitpartikel in Fig. 2 ähnelt der Partikelstruktur der $ZrO_2$-(monoklinen) Partikel der Fig. 1. Die durchschnittliche Partikelgröße beträgt etwa 25 μm. Die Oberflächenstruktur der Böhmitpartikel zeigt einen Kristallwachstumstyp, der in der Lage ist, ähnlich geformte Partikel mit kleinerer Partikelgröße zu bilden, die zu einer verdichteten Beschichtung weiterwachsen. Diese einzigartige Kristallwachstumseigenschaft ist für die Kristallisation von Böhmit auf Metalloxid-Impferpartikeln allgemein anwendbar.

Beispiel II

Hydrothermale Kristallisation von Böhmit auf (monoklinem) Zirkonoxid

Beispiel 2 wurde in gleicher Weise durchgeführt wie Bespiel 1, jedoch wurde das System mit $ZrO_2$-(monoklinem) Metalloxidpulver geimpft. Dieses Pulver wurde vorher beschrieben und wird in Fig. 1a - 1e gezeigt.

1 l der 0,45 M Aluminiumsulfat-/ 1,5 M Weinsäure-/ 10 M NaOH-Lösung wurde mit 15 g $ZrO_2$ (die monoklinen Partikel weisen eine durchschnittliche Partikelgröße von 15 $\mu$m auf) geimpft. Die hydrothermale Behandlung der Suspension bei 250 °C führte zu 35,3 g mit Böhmit beschichtetem $ZrO_2$ (monoklin), (das entspricht einem $Al_2O_3$:$ZrO_2$-Verhältnis von ca. 50 : 50). Der Glühverlust (1100 °C /1 h) des mit Böhmit beschichteten Zirkonoxids betrug 9,7 Gew.-%. Der $Na_2O$-Gehalt des Produkts betrug 0,23 % und der $SO_4{}^{2-}$-Gehalt 0,010 %.

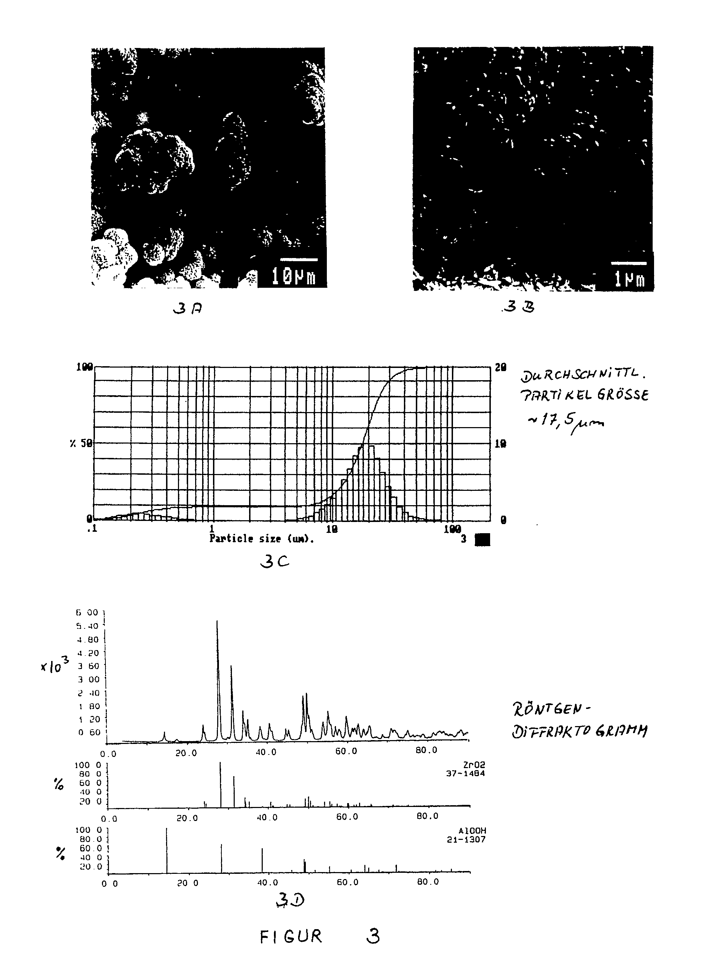

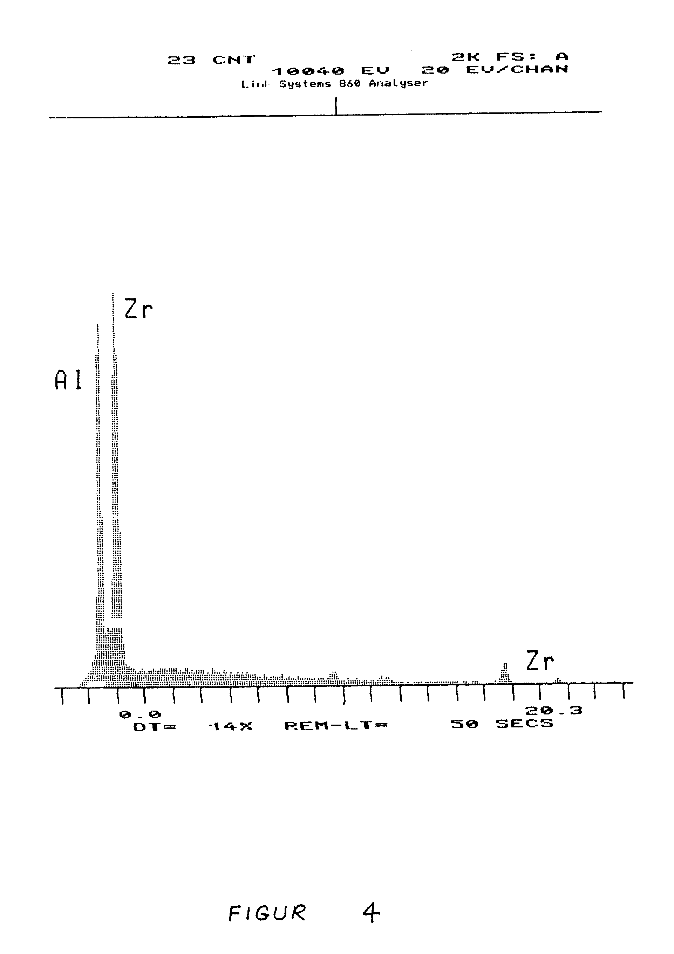

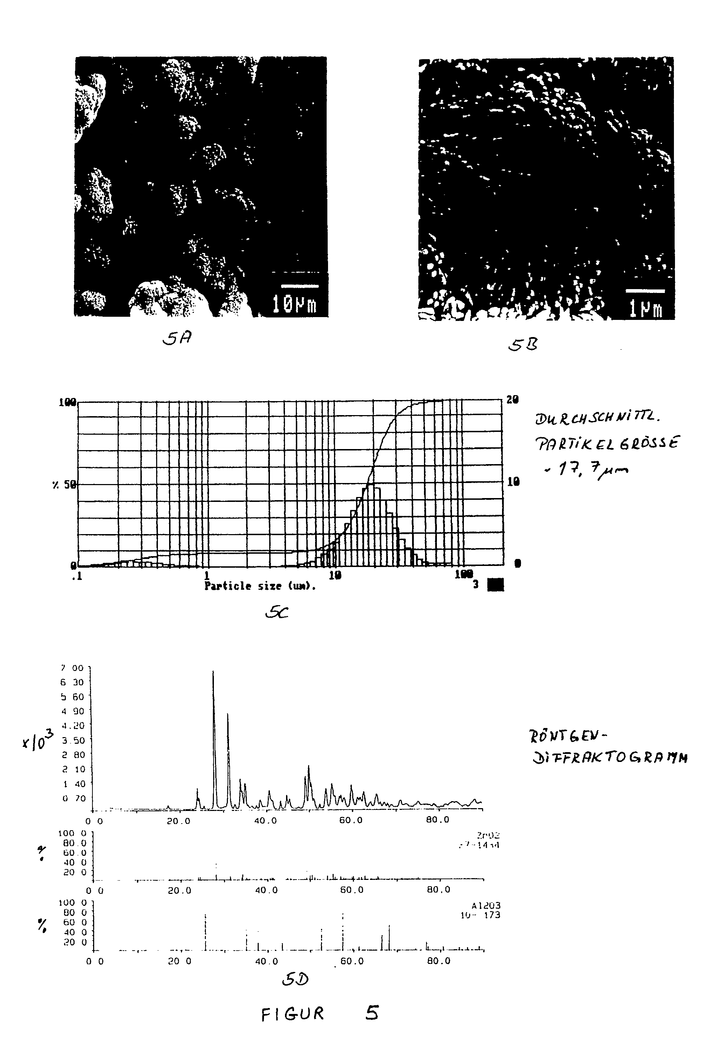

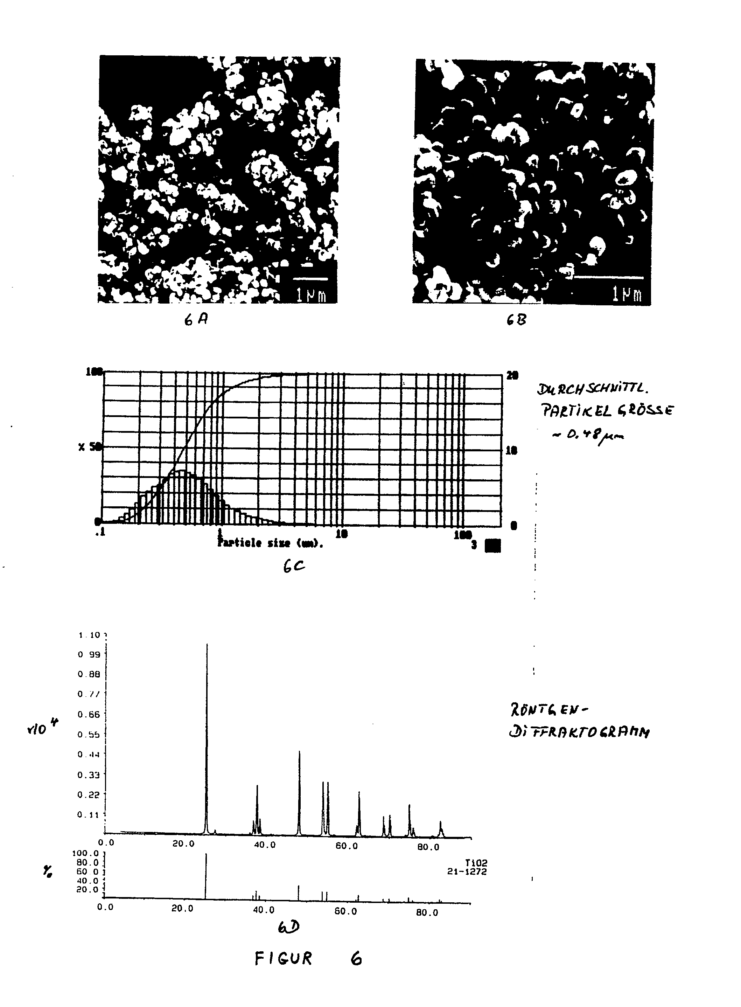

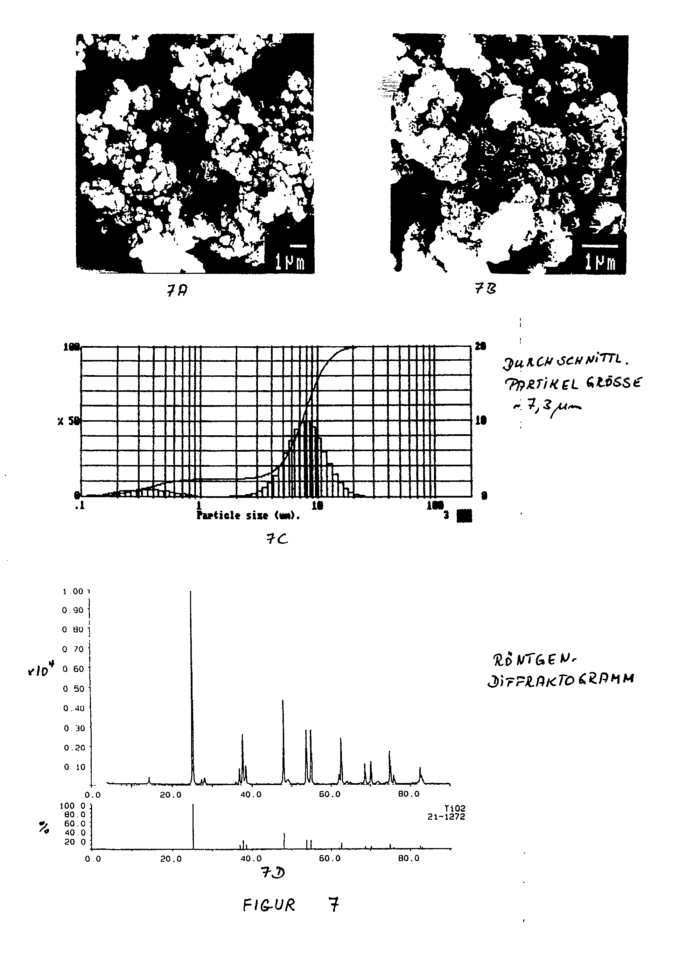

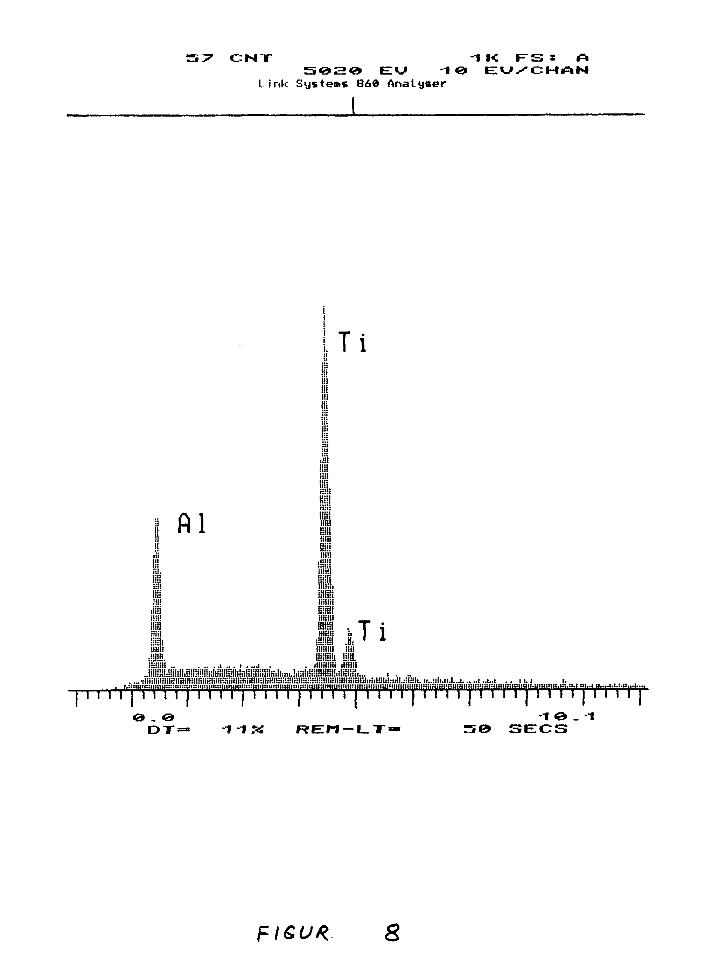

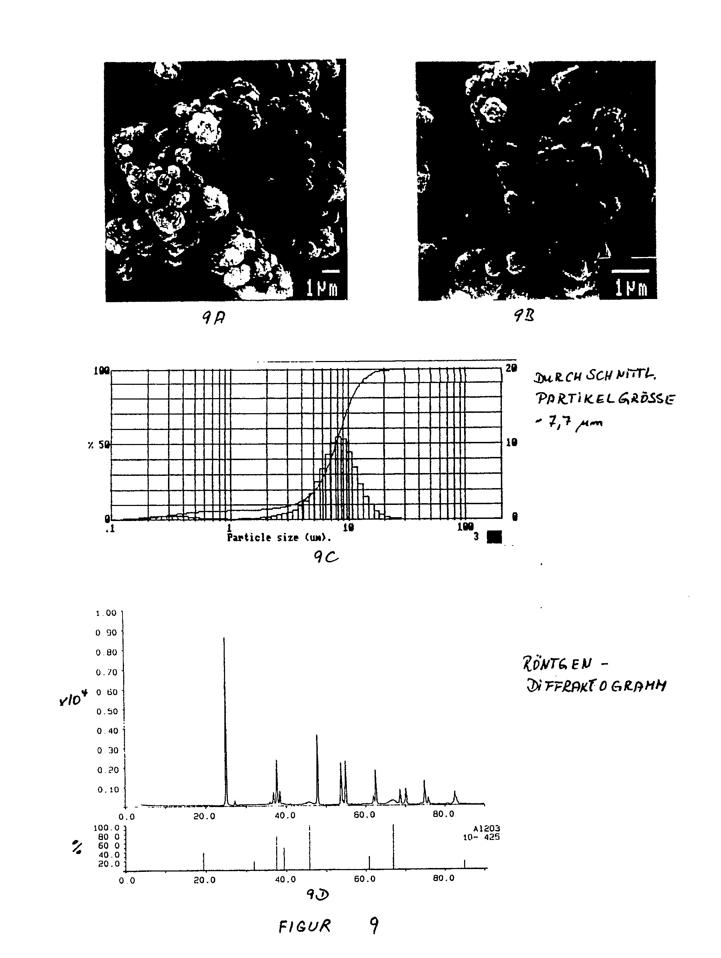

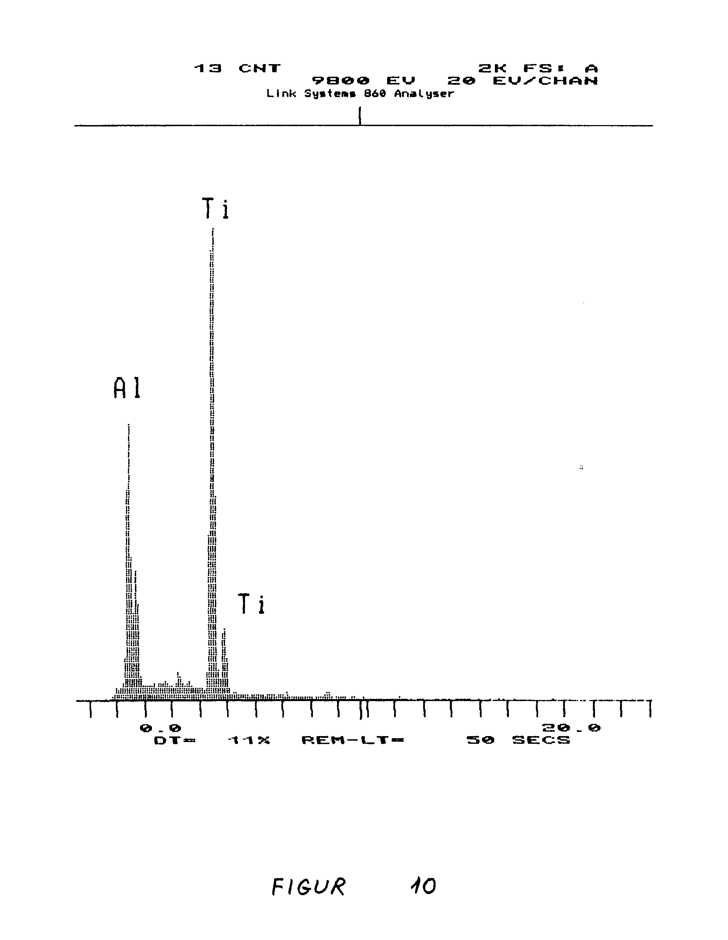

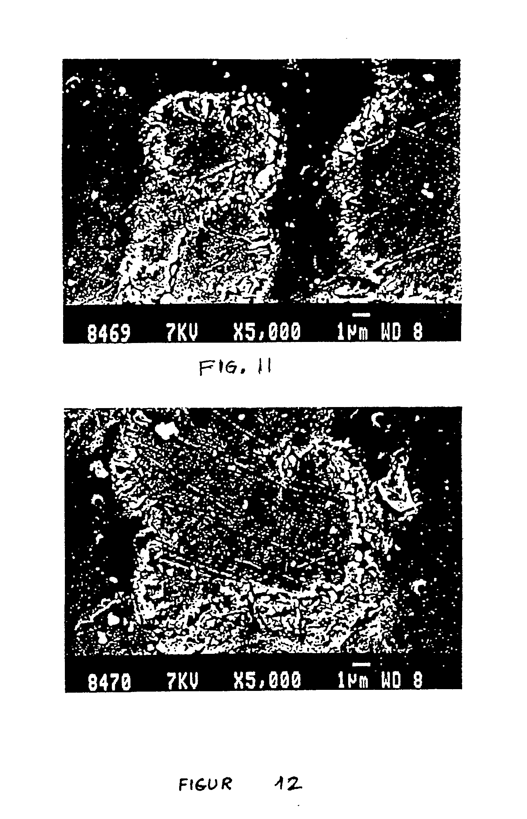

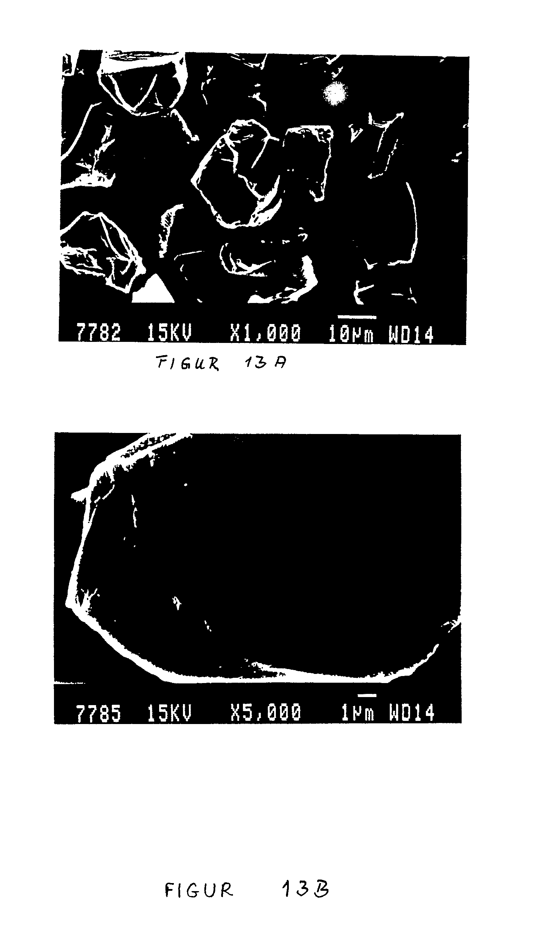

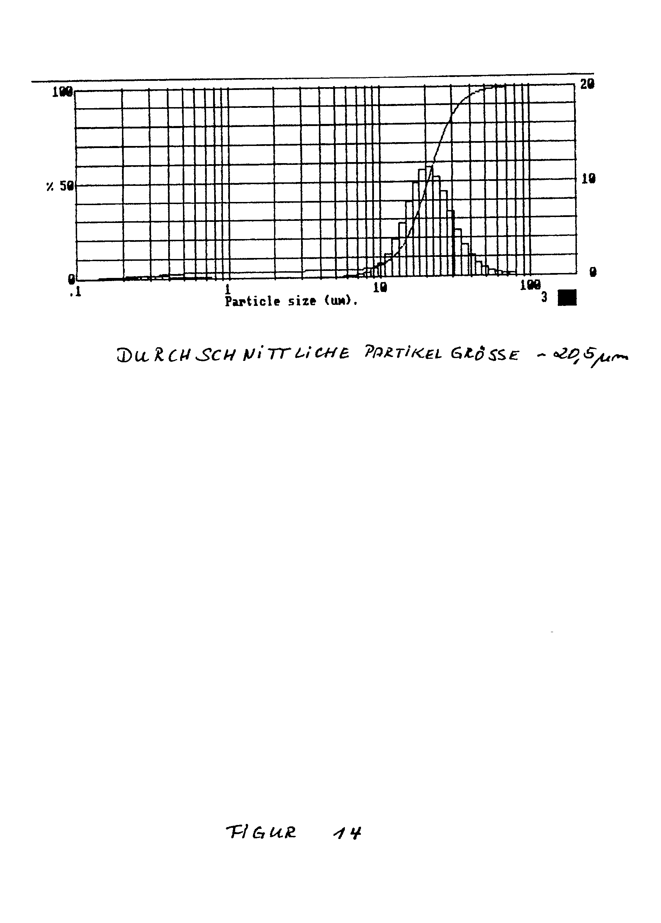

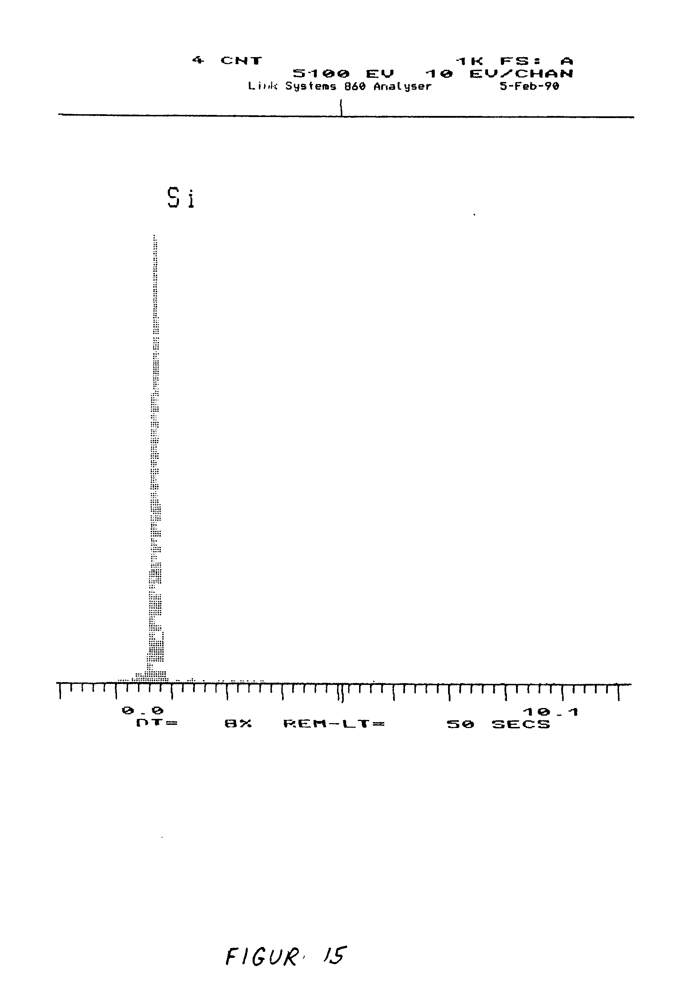

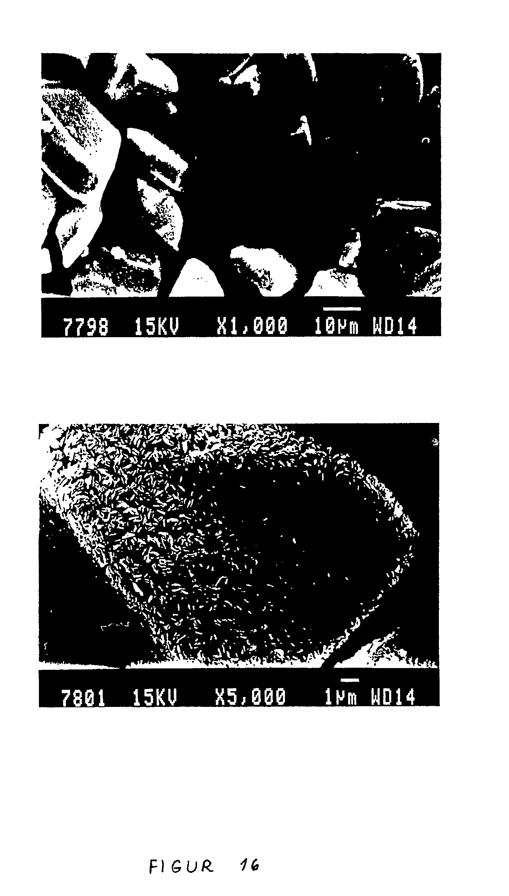

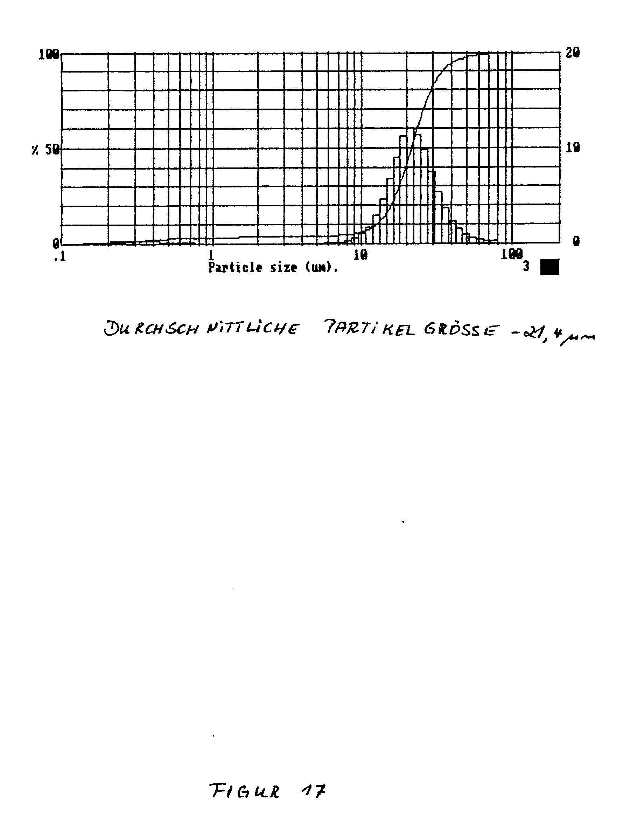

Fig. 3a zeigt die REM-Aufnahme des mit Böhmit beschichteten monoklinen Zirkonoxids, die Korngrößenverteilung dieser Partikel wird in Fig. 3b gezeigt und das Röntgen-Diffraktogramm der beschichteten Partikel in Fig. 3c. Die Vergrößerung der durchschnittlichen Partikelgröße auf 17,5 $\mu$m aufgrund der Böhmitbeschichtung deutet auf eine Dicke der Böhmitschicht von etwa 3 $\mu$m. Eine EDAX-Analyse der Partikel, dargestellt in Fig. 4, zeigte, daß das Böhmit gleichförmig auf den Metalloxidpartikeln abgelagert wurde. Der Begriff EDAX-Analyse bezieht sich auf die Analyse der Röntgenstrahlen, die von der festen Oberfläche durch Beschießung der Oberfläche mit einem Elektronenstrahl ausgehen ("EDAX" ist ein Akronym für "Energy Dispersive Analysis of X-Rays).

Die EDAX-Analyse wird in Verbindung mit den REM-Analysen mit Hilfe eines JEOL-840 Rasterelektronenmikroskops bei einer Beschleunigungsspannung von 20-25 kV durchgeführt. Bei dem zur Durchführung der EDAX-Analysen verwendeten Gerät handelt es sich um ein Links System Modell 860 mit Si(Li) Detektor (Link Systems, Halifax Road, High Wycombe, Bucks, HP12 3SE, England). Eine Kanalbreite von 10 eV wurde verwendet. Die EDAX-Analyse ist eine topochemische Analyse der Impulse/Zeiteinheit gegenüber eV.

Fig. 4 ist also eine Bestätigung, daß monoklines $ZrO_2$ mit Böhmit beschichtet wird. Die Böhmitbeschichtung ist sehr polykristallin, wobei die Böhmitkristalle verwachsen und auf den Oberflächen der Zirkonoxidpartikel zufällig orientiert sind. Das unregelmäßige Wachstumsmuster kann vorteilhaft sein, da es eine schnelle Freisetzung des Wassers erlaubt, wenn die Böhmitbeschichtung zur Bildung von Aluminiumoxid erhitzt (kalziniert) wird. In einem Wärmebehandlungstest, in dem das mit Böhmit beschichtete monokline Zirkonoxid bei einer Temperatur von 1240 °C über einen Zeitraum von 1 Stunde kalziniert wurde, wurde dies bestätigt. Die Erhitzung des monoklinen Zirkonoxids über die monokline ↔ tetragonale Umwandlungstemperatur von 1170 °C hinaus, verringerte das Volumen der Zirkonoxidprobe um ca. 5 %. Beim Kühlen unter die Umwandlungstemperatur auf Raumtemperatur erhielt das Zirkonoxid sein ursprüngliches Volumen zurück.

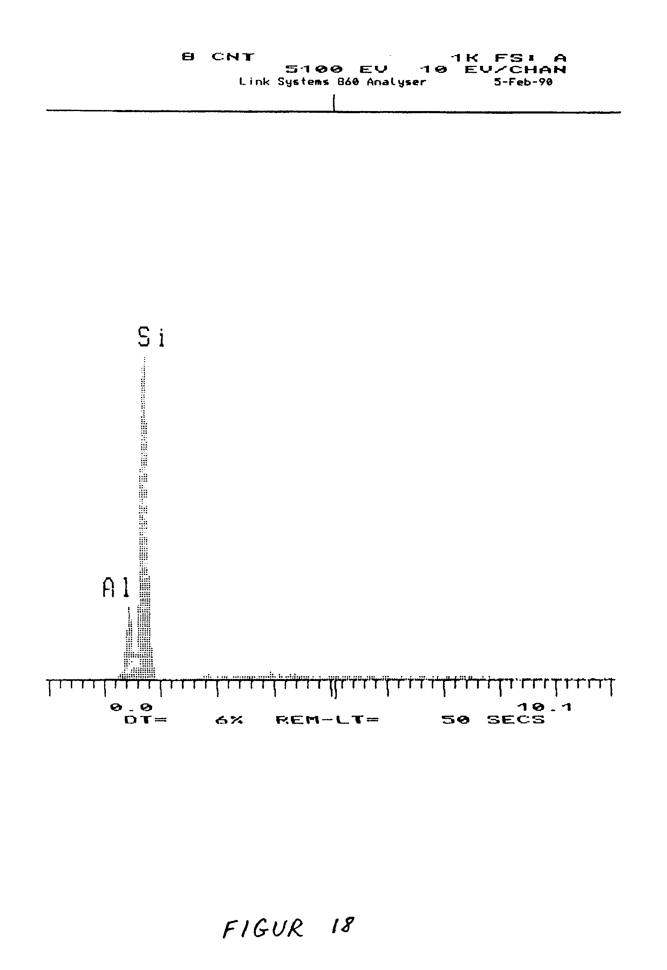

Fig. 5a, 5b bzw. 5c zeigen REM-Aufnahmen, Korngrößenanalyse und das Röntgen-Diffraktogramm für das kalzinierte mit Böhmit beschichtete monokline Zirkonoxid. Die Ergebnisse zeigen, daß die von Böhmit zu Aluminiumoxid umgewandelte Beschichtung auf dem monoklinen Zirkonoxid trotz der Wärmebehandlung intakt blieb.

Beispiel 3

Hydrothermale Kristallisation von Böhmit auf Titanoxid

Beispiel 3 wurde analog zu Beispiel 2 durchgeführt. Es wurde jedoch Titanoxid (in Form von $TiO_2$, Anatas) anstatt Zirkonoxid als Metalloxidimpfer verwendet. Das Titanoxid, das von Sachtleben Chemie GmbH, Duisburg-Homberg, BRD, erhältlich ist, ist in Fig. 6a und 6b dargestellt, zusammen mit der Partikelgrößenanalyse (Fig. 6c) und dem Röntgen-Diffraktogramm der Partikel (Fig. 6d).

Die hydrothermale Behandlung von 1 l der 0,45 M Aluminiumsulfat-/ 1,5 M Weinsäure-/ 10 M Natriumhydroxidlösung mit 30 g $TiO_2$-Impfer bei 250 °C für 60 Min. und bei 58 x $10^5$ Pa führte zu einem mit Böhmit beschichteten Titanoxid mit einem Gewicht von 50,1 g (das entspricht einem $Al_2O_3$:$TiO_2$-Verhältnis von ca. 35 : 65). Der Glühverlust (1100 °C/1 h) des Produkts betrug 7,9 Gew.-%. Der $Na_2O$-Gehalt des Produkts betrug 0,25 % und der $SO_4{}^{2-}$-Gehalt 0,020 %.

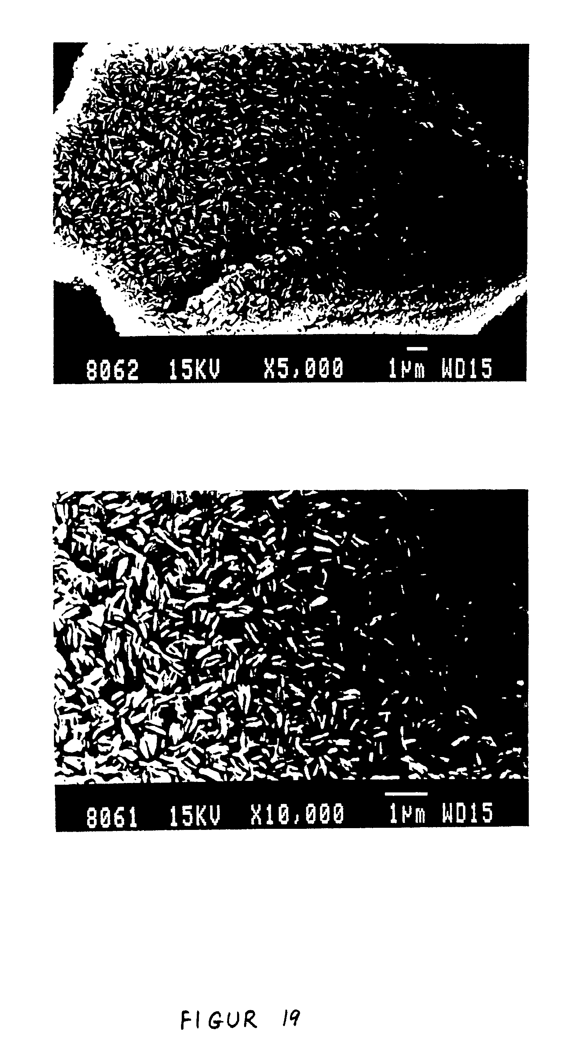

Fig. 7a und 7b zeigen REM-Aufnahmen der Titanoxidpartikel, zusammen mit der Korngrößenverteilung (Fig. 7c) und dem Röntgen-Diffraktogramm (Fig. 7d). Die Titanoxidpartikel sind eindeutig mit Böhmit beschichtet, obwohl die Partikelgröße (durchschnittliche Partikelgröße von 7 $\mu$m innerhalb einer engen Hauptgrößenverteilung) zeigt, daß die mit Böhmit beschichteten Partikel nicht nur durch das Kristallwachstum des Böhmits größer geworden sind, sondern auch durch nachfolgende Agglomeration. Die EDAX-Analyse (Fig. 8) zeigte eine allgemein gleichmäßige Beschichtung des Böhmits auf den Titanoxidpartikeln.

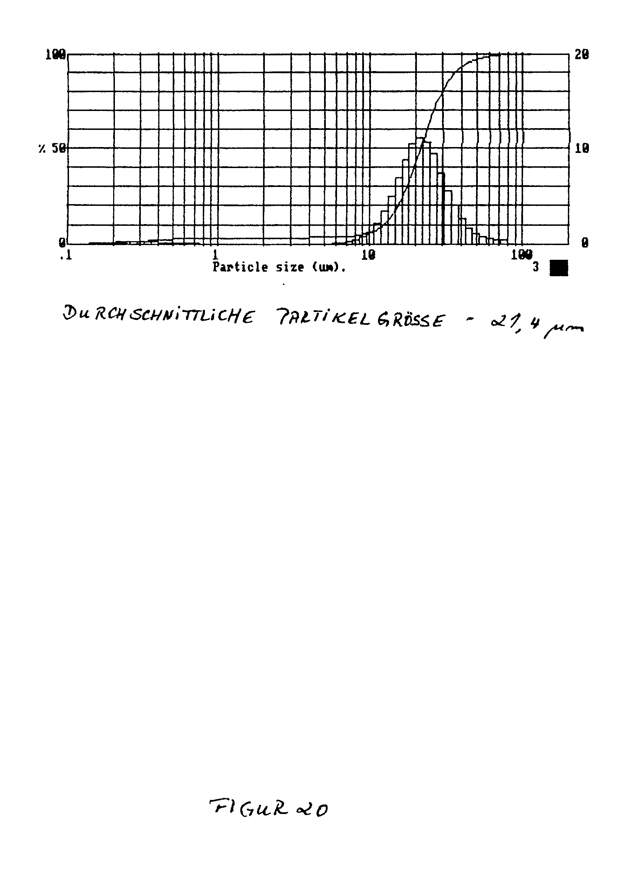

Ein Wärmebehandlungstest zur Feststellung, ob die Beschichtung nach dem 1-stündigen Erhitzen auf 600 °C intakt blieb, wurde durchgeführt. Zur Herstellung von Aluminiumtitanatkeramik wird mit Böhmit beschichteter Anatas in der Praxis zunächst bei einer relativ niedrigen Temperatur (z. B. 600 °C) zur Entfernung des größten Teils des Wassers aus dem Böhmit vorkalziniert. Diese vorläufigen Pulver wurden dann bei einer Temperatur > 1300 °C zur Bildung von Aluminiumtitanat schnell gebrannt. Fig. 9a und 9b zeigen REM-Aufnahmen des wärmebehandelten mit Böhmit beschichteten Titanoxids, zusammen mit der Partikelgrößenanalyse (Fig. 9c) und dem Röntgen-Diffraktogramm (Fig. 9d). Fig. 10 zeigt die EDAX-Analyse für die Partikel der Fig. 9a - c. Die Ergebnisse bestätigen, daß die kalzinierte Böhmitbeschichtung auf den Titanoxidpartikeln trotz Wärmebehandlung intakt blieb.

Beispiel 4

Hydrothermale Kristallisation von Böhmit auf Siliziumcarbid

Das Verfahren des Beispiels 1 wurde wiederholt mit dem Unterschied, daß 100 g der SiC-Partikel zu der Lösung im Autoklaven zugegeben wurden. Das verwendete SiC wies die Feinheit "F400" auf, die beim Elektro-Schmelzwerk, Kempten, BRD (durchschnittliche Partikelgröße 20,5 $\mu$m, Partikelgrößenbereich 0,1 bis 80 $\mu$m) erhältlich ist.

Fig. 13a und 13b sind REM-Aufnahmen des SiC (Vergrößerung 1000x bzw. 5000x). Fig. 14 zeigt die Korngrößenverteilung der SiC-Partikel. Fig. 15 ist eine EDAX-Analyse der gleichen Partikel.

Die Rührgeschwindigkeit für den Autoklaven betrug 500 Umdrehungen pro Min. Das mit Sauerstoff angereicherte und unter Druck gesetzte System wurde auf 280 °C erhitzt und 30 Min. lang bei dieser Temperatur gehalten.

Beim Kühlen auf Bedingungen atmosphärischen Drucks und eine Temperatur < 100 °C wurde die Suspension aus dem Autoklaven entfernt und die Feststoffe filtriert, mit heißem deionisiertem Wasser gewaschen und bei 110 °C getrocknet. Das getrocknete Produkt wog 118,7 g und wies eine Böhmitbeschichtung von 13,4 % (ausgedrückt als $Al_2O_3$-Äquivalent) auf. Der $Na_2O$-Gehalt des Produkts betrug 0,29 % und der Sulfat- ($SO_4^{2-}$)Gehalt 0,033 %.

Fig. 16 zeigt die REM-Aufnahme des mit Böhmit beschichteten Siliziumcarbids. Die Korngrößenverteilung ist in Fig. 17 und die EDAX-Analyse in Fig. 18 dargestellt. Die Vergrößerung der durchschnittlichen Partikelgröße auf 21,4 $\mu$m aufgrund der Böhmitbeschichtung deutet auf eine Dicke der Böhmitschicht von ca. 1 $\mu$m hin. Die EDAX-Analyse zeigt, daß der Böhmit gleichförmig auf den Siliziumcarbidpartikeln abgeschieden wurde.

Zur Umwandlung des Böhmits zu Aluminiumoxid wurde das mit Böhmit beschichtete Siliziumcarbid dann 1 Stunde lang bei einer Temperatur von 1100 °C kalziniert. Die entsprechende REM-Aufnahme (Fig. 19), die Partikelgrößenanalyse (Fig. 20) und die EDAX-Analyse (Fig. 21) zeigen, daß die von Böhmit zu Aluminiumoxid umgewandelte Beschichtung auf dem Siliziumcarbid trotz Wärmebehandlung intakt blieb.

Beispiel 5

Hydrothermale Kristallisation von Böhmit auf Titandiborid

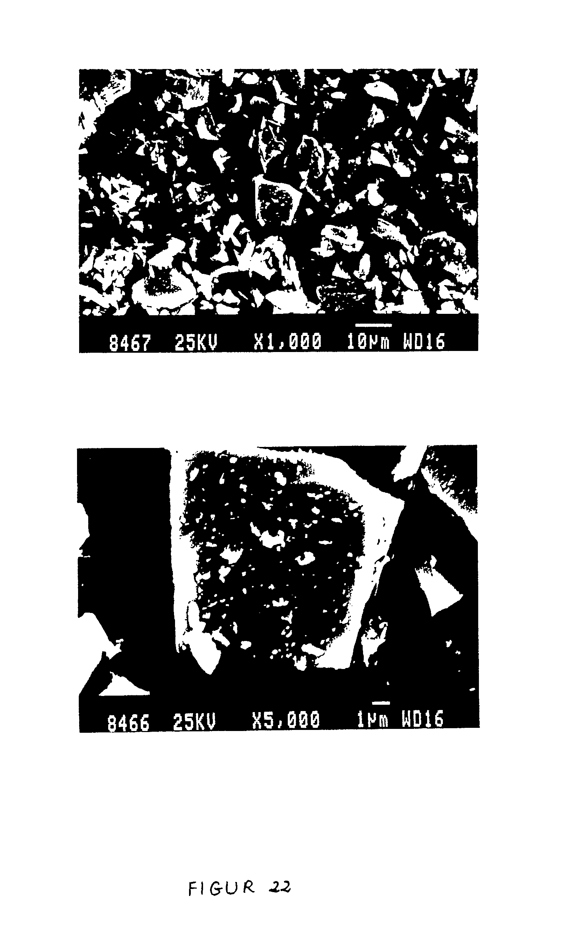

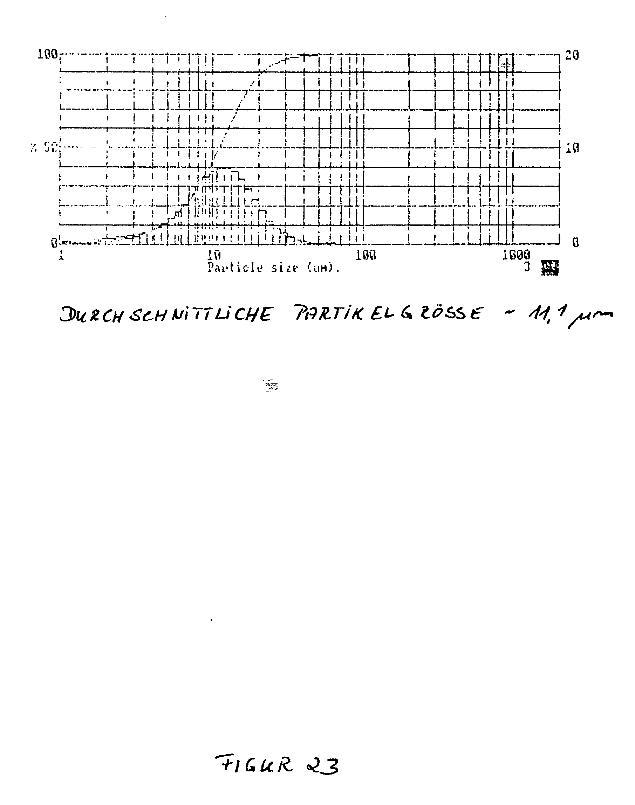

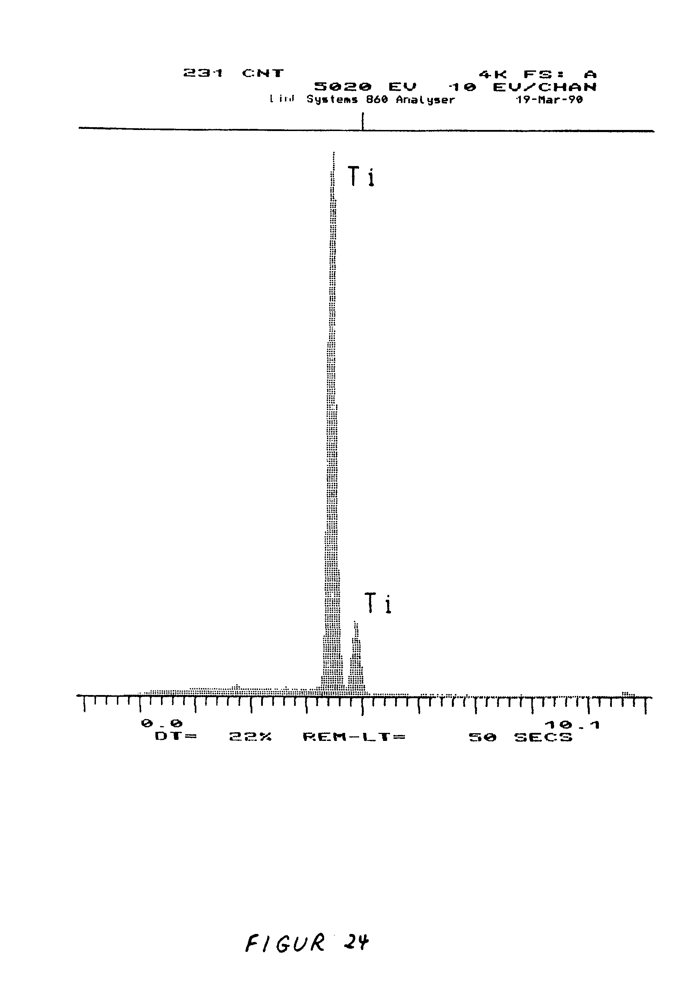

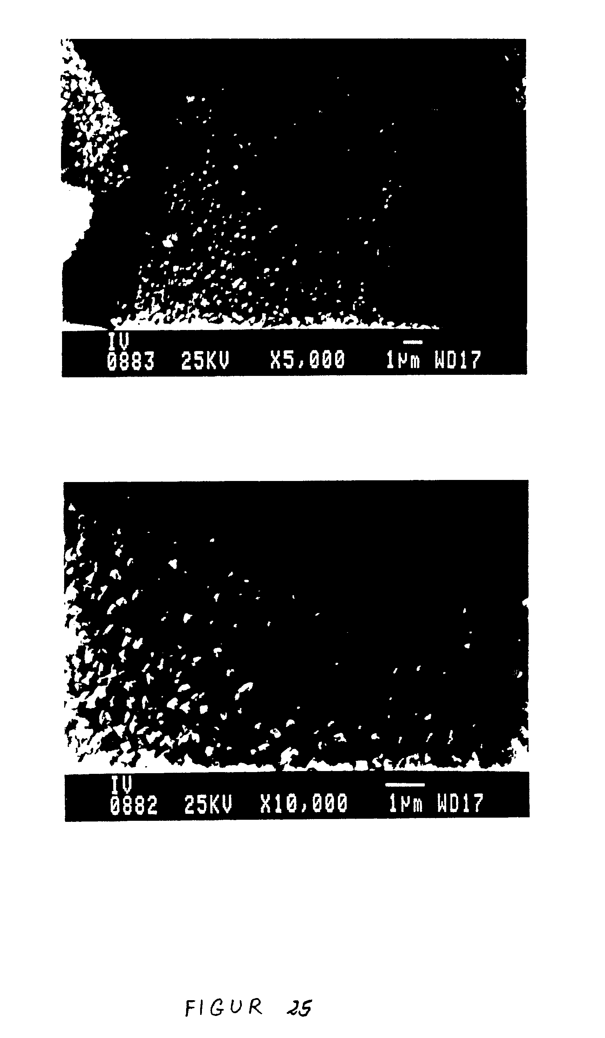

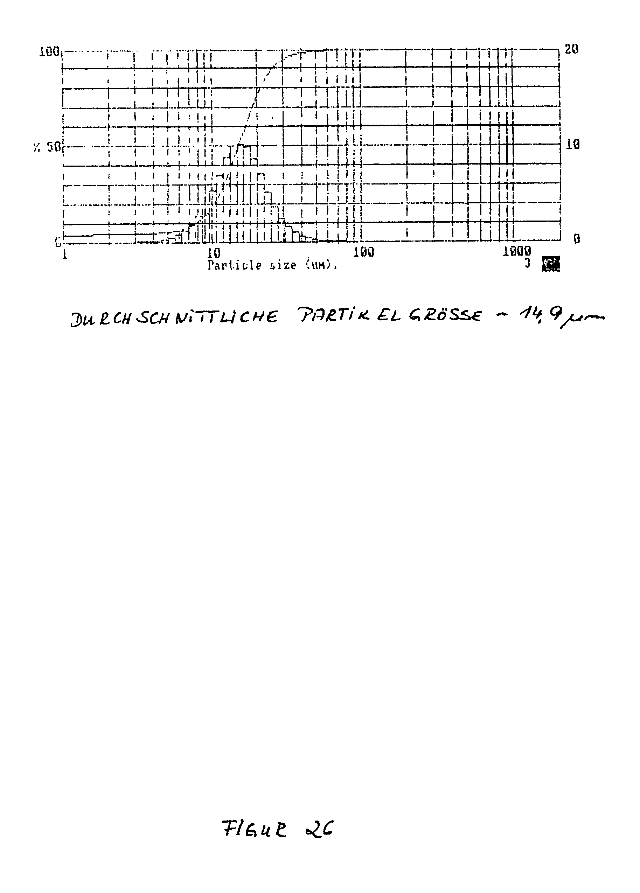

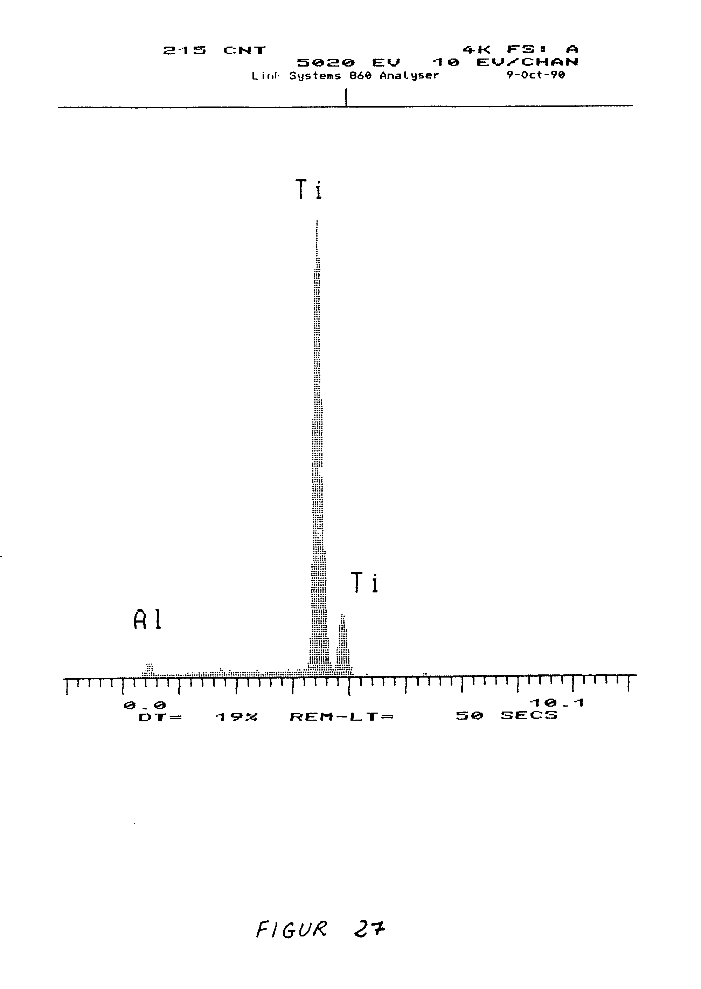

Beispiel 5 wurde in gleicher Weise durchgeführt wie Beispiel 1, jedoch wurde als nichtoxidisches Keramikpulver Titandiborid verwendet. Das verwendete Titandiborid ist von H. C. Stark Berlin, 7887 Laufenburg (Baden), Postfach 1229, BRD, erhältlich. Fig. 22 zeigt die REM-Aufnahme des Titandiborids, Fig. 23 die Korngrößenverteilung und Fig. 24 die EDAX-Analyse. Die durchschnittliche Partikelgröße beträgt 11,1 $\mu$m.

Die hydrothermale Behandlung von 1 l der 0,45 M Aluminiumsulfat-/ 1,5 M Weinsäure-/ 10 M Natriumhydroxidlösung mit 150 g Titandiborid bei 280 °C für 30 Min. führte zu mit Böhmit beschichtetem Titandiborid, das nach dem Waschen und Trocken bei 110 °C 168,5 g wog. Die Böhmitbeschichtung betrug 9,3 % (ausgedrückt als $Al_2O_3$-Äquivalent). Der $Na_2O$-Gehalt des Produkts betrug 0,20 % und der $SO_4^{2-}$-Gehalt weniger als 0,01 %.

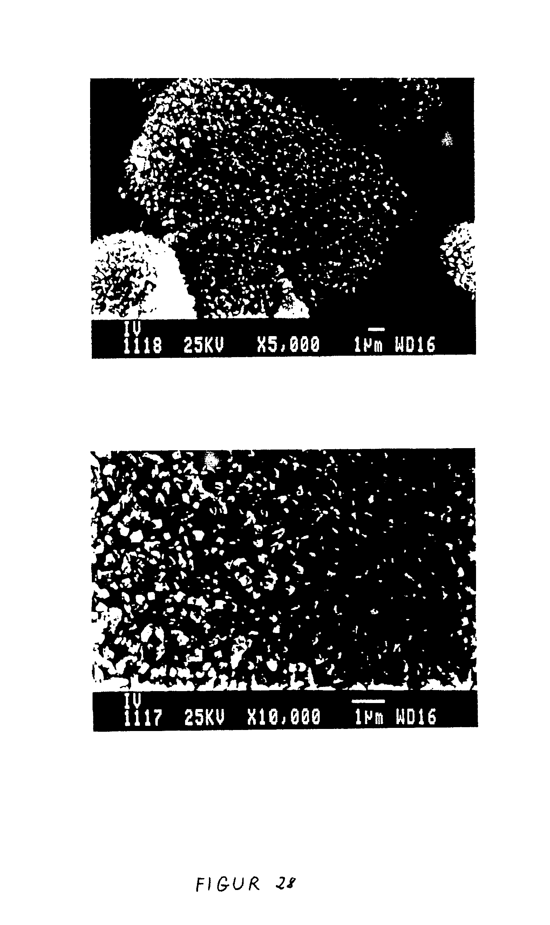

Fig. 25 zeigt die REM-Aufnahme der mit Böhmit beschichteten Titandiboridpartikel, Fig. 26 die Korngrößenverteilung und Fig. 27 die EDAX-Analyse. Die Titandiboridpartikel sind eindeutig mit Böhmit beschichtet, obwohl die Partikelgröße (durchschnittlich 14,9 $\mu$m) zeigte, daß die mit Böhmit beschichteten Partikel nicht nur durch das Kristallwachstum des Böhmits größer geworden sind, sondern auch durch leichte Agglomeration aufgrund der texturierten Oberfläche des abgelagerten Böhmits. Die EDAX-Analyse zeigte eine im wesentlichen ebene Beschichtung des Böhmits auf den Titandiboridpartikeln. Fig. 28, 29 und 30 zeigen die REM-Aufnahmen, Partikelgrößenanalyse und EDAX-Analyse für das kalzinierte ( 1100 °C/ 1 h) mit Böhmit beschichtete Titandiborid. Die Ergebnisse zeigen deutlich, daß die von Böhmit zu Aluminiumoxid umgewandelte Beschichtung auf dem Titandiborid trotz Wärmebehandlung intakt blieb.

Die vorliegende Erfindung liefert also ein Verfahren zur Beschichtung sowohl von Metalloxidpulvern als auch von nichtoxidischen keramischen Pulvern mit Böhmit. Die beschichteten Partikel können dann in situ

9

mit geringer oder gar keiner Zerstörung der gebildeten Aluminiumoxidschicht kalziniert werden. Die Tatsache, daß das gleiche Verfahren sowohl mit $ZrO_2$ als auch mit $TiO_2$ und sowohl mit SiC als auch TiC verwendet werden kann, die unterschiedliche Oberflächeneigenschaften aufweisen, zeigt, daß die Bildung chemischer Bindungen keine Voraussetzung für den Beschichtungsprozeß ist. Das Verfahren der vorliegenden Erfindung kann deshalb auf einen weiten Bereich von Metalloxiden einschließlich Zirkonoxid, Titanoxid, Magnesiumoxid, Oxide der Metalle Nickel, Kobalt, Zink, Chrom, Eisen und der seltenen Erden und auch auf nichtoxidische keramischen Pulvern einschließlich Titancarbid, Borcarbid, Siliziumnitrid oder Titanborid ohne Einschränkung angewendet werden.

Die Vorteile der Verfahren und "Zusammensetzungen" der vorliegenden Erfindung gegenüber den Verfahren und "Zusammensetzungen" des Stands der Technik sind wie folgt:
- die entstehende Böhmitbeschichtung hat eine relativ hohe Reinheit, d. h. es findet nur eine geringe Anionen-"Aufnahme" während der Kristallisation statt,
- die kristalline Böhmitbeschichtung weist einen niedrigen Wassergehalt auf - niedriger Wassergehalt bedeutet weniger Schrumpfung bei der Kalzination und minimale Zerstörung der Beschichtung
- das Oxid wird mit einem kristallinen Material beschichtet, d. h. das kristalline (Böhmit-) Material ist leicht mit geringem Bedarf an Waschwasser filtrierbar
- die Oxidbeschichtung ist homogen - die Beschichtung ist gleichförmig und entsteht trotz hoher Rührgeschwindigkeit, d. h. unter perfekten Mischbedingungen.

Durch Auswahl der Größe der keramischen Ausgangs- (Kern-) Partikel und durch Veränderung der Dicke der Beschichtung kann die Partikelgröße der beschichteten Endpartikel gesteuert werden.

Die Steuerung der Dicke der Böhmitschicht wird durch Veränderung der Dicke der Böhmitschicht, der Impfermenge und der Aluminiumkonzentration der Lauge erzielt.

Die in wesentlichen gleichförmige Abscheidung des Böhmits auf den Kernkeramikpartikeln stellt eine homogene Verteilung der zwei Phasen sicher

Darüberhinaus ist die Geschwindigkeit der Böhmitkristallisation unter hydrothermalen Bedingungen hoch. Je höher die Temperatur für die hydrothermale Behandlung ist, desto kürzer ist die Verweilzeit unter den hydrothermalen Bedingungen, die zur Herstellung der Böhmitkristalle benötigt wird. Z. B. sind einige Temperatur-Zeit-Kombinationen zur Erzeugung von Böhmitkristallen wie folgt:

| Mit zugegebenem $O_2^*$ | Autoklav-Wasserdampf-druck | Temp. | | Verweilzeit |
|---|---|---|---|---|
| 32 | $15,9 \times 10^5$ Pa | 200 °C | erf. | > 2 Std. |
| 58 | $40,6 \times 10^5$ Pa | 250 °C | " | 1 Std. |
| 84 | $65,5 \times 10^5$ Pa | 280 °C | " | 30 Min. |
| 107 | $87,6 \times 10^5$ Pa | 300 °C | " | 15 Min. |

$^*$ $O_2$ wird hier bei $10 \times 10^5$ Pa und 25 °C zu dem Autoklaven zugegeben.

**Patentansprüche**

1. Verfahren zum Beschichten von Keramikpulvern, wobei die Keramiken aus der Gruppe der Metalloxide und nichtoxidischen keramischen Pulvern und Kombinationen daraus mit Aluminiumoxid ausgewählt werden, gekennzeichnet durch die folgenden Schritte:
   - Zugabe eines organischen Komplexbildners zu einer wäßrigen sauren aluminiumhaltigen Lösung
   - Anheben des pH-Wertes der Lösung auf mindestens 9
   - Zugabe einer festgelegten Menge Pulverpartikel in die Lösung zur Bildung einer Supension
   - Anheben der Temperatur der Suspension auf etwa 150 °C bis 350 °C und
   - Abtrennen der mit Böhmit beschichteten Partikel aus der Suspension

2. Verfahren nach Anspruch 1, wobei dieses Verfahren die Kalzination der Böhmitbeschichtung umfaßt.

3. Verfahren nach Anspruch 1, wobei dieses Verfahren das Waschen der mit Böhmit beschichteten Partikel umfaßt.

4. Verfahren nach Anspruch 2, wobei das Verfahren das Waschen der Partikel mit deionisiertem Wasser umfaßt.

5. Verfahren nach Anspruch 1, dadurch gekennzeichnet, daß die aluminiumhaltige Lösung aus der Gruppe, bestehend aus Aluminiumsulfat, Aluminiumnitrat und Aluminiumchlorid, ausgewählt wird.

6. Verfahren nach Anspruch 1, dadurch gekennzeichnet, daß der organische Komplexbildner eine Carbonsäure ist.

7. Verfahren nach Anspruch 5, dadurch gekennzeichnet, daß die Carbonsäure aus der Gruppe, bestehend aus Gluconsäure, Weinsäure, Zitronensäure und Oxalsäure, ausgewählt wird.

8. Verfahren nach Anspruch 1, dadurch gekennzeichnet, daß der pH-Wert durch Zugabe einer Lauge aus der Gruppe, bestehend aus NaOH, KOH und $NH_4OH$, angehoben wird.

9. Verfahren nach Anspruch 1, dadurch gekennzeichnet, daß die Partikel Metalloxidpartikel sind.

10. Verfahren nach Anspruch 9, dadurch gekennzeichnet, daß die Partikel aus der Gruppe, bestehend aus Zirkonoxid, Titanoxid, Magnesiumoxid, Oxiden der Metalle Nickel, Kobalt, Zink, Chrom, Eisen und den seltenen Erden, ausgewählt werden.

11. Verfahren nach Anspruch 9, dadurch gekennzeichnet, daß der Temperaturanhebungsschritt aus der Erhitzung der Suspension für mind. 15 Min. bei 300 °C, für mind. 30 Min. bei 280 °C, für mind. 60 Min. bei 250 °C oder der Erhitzung der Suspension für mehr als 2 Std. bei 200 °C besteht.

12. Verfahren nach Anspruch 1, dadurch gekennzeichnet, daß die hydrothermale Reaktion in Gegenwart eines sauerstoffhaltigen Gases durchgeführt wird.

13. Verfahren nach Anspruch 1, dadurch gekennzeichnet, daß die mit Böhmit beschichteten Partikel durch Filtration, Zentrifugation oder Sedimentation abgetrennt werden.

14. Verfahren nach Anspruch 1, dadurch gekennzeichnet, daß der Kalzinationschritt bei einer Temperatur > 400 °C durchgeführt wird.

15. Verfahren nach Anspruch 1, dadurch gekennzeichnet, daß ein stabiler Komplex zwischen Aluminium und dem Komplexbildner gebildet wird.

16. Verbundpulver, das eine Reihe von Partikeln der Gruppe, bestehend aus Metalloxidpartikeln und nichtoxidischen Keramikpartikeln mit einer Beschichtung aus einem kristallinen Böhmitmaterial, umfaßt, wobei die Beschichtung mindestens substantiell homogen ist.

17. Verbundpulver nach Anspruch 16, dadurch gekennzeichnet, daß das Pulver aus mit Böhmit beschichteten Partikeln mit einer durchschnittlichen Partikelgröße von etwa 0,5 bis 50 µm besteht.

18. Ein festes anorganisches Partikel, das aus einem festen Kernpartikel mit einer äußeren Oberfläche und einer durchschnittlichen Partikelgröße von weniger als ca. 1000 µm besteht; wobei die Kernpartikel eine Beschichtung des kristallinen Böhmits auf der äußeren Oberfläche aufweisen.

19. Pulver nach Anspruch 16, dadurch gekennzeichnet, daß die Partikel aus Metalloxidpartikeln bestehen und die Beschichtung homogen ist.

20. Verfahren nach Anspruch 1, dadurch gekennzeichnet, daß die Partikel aus nichtoxidischen Keramikpartikel bestehen.

21. Verfahren nach Anspruch 20, dadurch gekennzeichnet, daß die Partikel aus der Gruppe, bestehend aus Siliziumcarbid, Titancarbid, Titandiborid, Borcarbid und Siliziumnitrid, ausgewählt werden.

22. Verfahren nach Anspruch 20, dadurch gekennzeichnet, daß der Temperaturanhebungsschritt entweder aus der Erhitzung der Suspension für mind. 15 Min. bei 300 °C, für mind. 30 Min. bei 280 °C, für mind. 60 Min. bei 200 °C oder für mehr als 2 Std. bei 150 °C besteht.

1A

1B

Particle size (um).

1C

DURCHSCHNITTL.
PARTIKEL GRÖSSE
~ 14,5 μm

ZrO2 BADDELEYITE, SYN
37-1484

1D

RÖNTGEN-
DIFFRAKTOGRAMM

FIGUR  1

2A

2B

2C

DURCHSCHNITTL.
PARTIKEL GRÖSSE
~ 25, 2 μm

RÖNTGEN -
DIFFRAKTOGRAMM

2D

FIGURE 2

3 A

3 B

3 C

DURCHSCHNITTL.
PARTIKEL GRÖSSE
~17,5 μm

RÖNTGEN-
DIFFRAKTOGRAMM

3 D

FIGUR    3

23 CNT         2K FS: A
10040 EV   20 EV/CHAN
Link Systems 860 Analyser

*FIGUR 4*

5A

5B

DURCHSCHNITTL.
PARTIKELGRÖSSE
~ 17, 7 μm

5C

RÖNTGEN-
DIFFRAKTOGRAMM

5D

FIGUR 5

6 A

6 B

6C

Particle size (un).

DURCHSCHNITTL.
PARTIKEL GRÖSSE
~ 0.48 μm

×10⁴

RÖNTGEN-
DIFFRAKTOGRAMM

T102
21-1272

%

6D

FIGUR 6

18

EP 0 454 138 A2

7A

7B

7C

DURCHSCHNITTL. PARTIKEL GRÖSSE ~ 7,3 μm

RÖNTGEN-DIFFRAKTOGRAMM

7D

FIGUR 7

57 CNT                    1K  FS:  A
                  5020  EV   10  EV/CHAN
              Link Systems 860 Analyser

Ti

Al

Ti

0.0                                      10.1
DT=   11%   REM-LT=   50  SECS

FIGUR.   8

9A

9B

DURCHSCHNITTL.
PARTIKEL GRÖSSE
~ 7,7 μm

9C

RÖNTGEN -
DIFFRAKTOGRAMM

9D

FIGUR 9

13 CNT                    2K FS: A
          9800 EV   20 EV/CHAN
     Link Systems 860 Analyser

Ti

Al

Ti

0.0                                20.0
DT= 11X   REM-LT=   50 SECS

FIGUR     10

FIG. 11

FIGUR 12

7782   15KV   X1,000   10µm WD14

FIGUR   13 A

7785   15KV   X5,000   1µm WD14

FIGUR   13 B

DURCHSCHNITTLICHE PARTIKEL GRÖSSE ~ 20,5 µm

FIGUR 14

4 CNT 1K FS: A
5100 EV 10 EV/CHAN
Link Systems 860 Analyser 5-Feb-90

Si

0.0 10.1
DT= 8% REM-LT= 50 SECS

FIGUR 15

7798   15KV   X1,000   10μm WD14

7801   15KV   X5,000   1μm WD14

FIGUR  16

DURCHSCHNITTLICHE PARTIKEL GRÖSSE -21,4 µm

FIGUR 17

FIGUR 18

8062   15KV   X5,000   1µm  WD15

8061   15KV   X10,000   1µm  WD15

FIGUR 19

DuRCHSCHNITTLICHE PARTIKEL GRÖSSE – 21,4 μm

FIGUR 20

8467   25KU      X1,000     10µm WD16

8466    25KU     X5,000     1µm WD16

FIGUR 22

DURCHSCHNITTLICHE PARTIKELGRÖSSE ~ 11,1 μm

FIGUR 23

231 CNT 4K FS: A
5020 EV 10 EV/CHAN
Lirk Systems 860 Analyser 19-Mar-90

Ti

Ti

0.0 10.1
DT= 22% REM-LT= 50 SECS

FIGUR 24

IU
0883  25KV    X5,000     1Pm WD17

IU
0882  25KV   X10,000     1Pm WD17

FIGUR 25

DURCHSCHNITTLICHE PARTIKEL GRÖSSE ~ 14,9 μm

FIGUR 2C

215 CNT                    4K FS: A
                5020 EV   10 EV/CHAN
        Link Systems 860 Analyser      9-Oct-90

Ti

Ti

Al

0.0                                    10.1
DT=  19%   REM-LT=    50 SECS

*FIGUR 27*

FIGUR 28

DURCHSCHNITTLICHE PARTIKELGRÖSSE ~ 15,2 µm

FIGUR 29

204 CNT                         4K FS: A
                 5020 EU    10 EU/CHAN
            Lird Systems 860 Analyser        18-Oct-90

Ti

Ti

Al

0.0                                        10.1
DT=    22X    REM-LT=    50 SECS

FIGUR 30